# EUROPEAN PATENT SPECIFICATION

(11) **EP 4 116 936 B1**
(45) Date of publication and mention of the grant of the patent: **07.10.2026**
(21) Application number: 21763499.7
(22) Date of filing: 26.01.2021
(51) Int. Cl.: G06T 19/00, G06Q 50/02, G06F 3/0481, G06F 3/01

(54) **INFORMATION PROCESSING DEVICE, INFORMATION PROCESSING METHOD, AND INFORMATION PROCESSING PROGRAM**
VORRICHTUNG, VERFAHREN UND PROGRAMM FÜR DIE INFORMATIONSVERARBEITUNG
DISPOSITIF, PROCÉDÉ ET PROGRAMME DE TRAITEMENT D'INFORMATIONS

(30) Priority: 06.03.2020 JP 2020038389
(43) Date of publication of application: 11.01.2023
(73) Proprietor: Sony Group Corporation, Tokyo 108-0075 (JP)
(72) Inventor: TAJIMA, Daisuke, Tokyo 108-0075 (JP); ICHIKAWA, Miwa, Tokyo 108-0075 (JP); YUMIBA, Hiromu, Tokyo 108-0075 (JP); ISHII, Tomohiro, Tokyo 108-0075 (JP); FUNABASHI, Masatoshi, Tokyo 141-0022 (JP)
(74) Representative: D Young & Co LLP
(86) International application number: PCT/JP2021/002686
(87) International publication number: WO 2021/176892

(56) References cited:
- EP-A1- 3 361 448
- WO-A1-2017/061281
- JP-A- 2012 530 975
- JP-A- 2013 069 177
- JP-A- H11 144 063
- US-A1- 2019 259 108

## Description

### Field

The present disclosure relates to an information processing apparatus, an information processing method, and an information processing program.

### Background

As an example of the agricultural methods, there is an agricultural method referred to as Synecoculture (registered trademark), which is based on no cultivation, no fertilization, and no pesticide. Synecoculture (registered trademark) is influenced by various ecosystem constituents constituting an ecosystem, making it difficult for a worker to learn Synecoculture (registered trademark) in a short period of time, leading to the necessity of having assistance from a skilled person. Therefore, in recent years, attention has been paid to a technology in which a skilled person in a farm field (for example, a field or a farm) remotely assists a worker in agriculture.

In the assistance of Synecoculture (registered trademark), there is a need to remotely give an accurate instruction to a worker in a remote place such as a farm field. Therefore, in recent years, augmented reality (AR) has attracted attention as a technology of giving an accurate instruction based on vision to a worker in a remote location.

### Citation List

### Patent Literature

Patent Literature 1: WO 2017/061281 A
Patent Literature 2: EP 3361448 A1
Patent Literature 3: US 2019/259108 A1

### Summary

### Technical Problem

However, in the conventional AR technology, there can be a case where the user has difficulty in accurately grasping the association between the ecosystem constituent and the visualized information. Because of this, there has been room for facilitating further improvement in usability.

In view of this, the present disclosure proposes novel and improved information processing apparatus, information processing method, and information processing program capable of facilitating further improvement in usability.

### Solution to Problem

The present disclosure is defined by the appended set of claims.

### Brief Description of Drawings

FIG. 1 is a diagram illustrating a configuration example of an information processing system according to an embodiment.
FIG. 2 is a diagram illustrating an implemented example of the information processing system according to the embodiment.
FIG. 3 is a diagram illustrating an implemented example of the information processing system according to the embodiment.
FIG. 4 is a diagram illustrating an implemented example of the information processing system according to the embodiment.
FIG. 5 is a diagram illustrating an outline of functions of the information processing system according to the embodiment.
FIG. 6 is a block diagram illustrating a configuration example of the information processing system according to the embodiment.
FIG. 7 is a diagram illustrating an outline of functions of the information processing system according to the embodiment.
FIG. 8 is a diagram illustrating an example of a variation of visualized information according to the embodiment.
FIG. 9 is a diagram illustrating an example of a storage unit according to the embodiment.
FIG. 10 is a flowchart illustrating a flow of processing in an information processing apparatus according to the embodiment.
FIG. 11 is a flowchart illustrating a flow of processing in the information processing apparatus according to the embodiment.
FIG. 12 is a flowchart illustrating a flow of processing in the information processing apparatus according to the embodiment.
FIG. 13 is a flowchart illustrating a flow of processing in the information processing apparatus according to the embodiment.
FIG. 14 is a diagram illustrating an example of a variation of the visualized information according to the embodiment.
FIG. 15 is a hardware configuration diagram illustrating an example of a computer that implements functions of the information processing apparatus.

### Description of Embodiments

A preferred embodiment of the present disclosure will be described in detail hereinbelow with reference to the accompanying drawings. Note that redundant descriptions will be omitted from the present specification and the drawings by assigning the same reference signs to components having substantially the same functional configuration.

Note that the description will be provided in the following order.
1. One embodiment of present disclosure
1.1. Introduction
1.2. Configuration of information processing system
2. Implemented example of information processing system
2.1. Confirmation of farm field and movement to work place
2.2. Work
2.3. Confirmation after work
3. Function of information processing system
3.1. Outline of functions
3.2. Functional configuration example
3.3. Processing of information processing system
3.4. Variations of processing
4. Hardware configuration example
5. Summary

### <<1. One embodiment of present disclosure>>

### <1.1. Introduction>

Regarding Synecoculture (registered trademark), it is also important to understand compatibility between ecosystem constituents such as plants and complexity of the entire ecosystem. For this reason, for example, a technology of applying visualized information such as labeling to an ecosystem constituent using the AR technology has attracted attention. However, there is a case, in Synecoculture (registered trademark), where a wide variety of ecosystem constituents are densely arranged, and in this case, visualized information would be given to a large amount of ecosystem constituents. This can make it difficult for the user to accurately grasp the association between the ecosystem constituent and the visualized information.

In addition, for example, although a technology of displaying visualized information indicating conceptual information (for example, altitude or temperature) associated with each ecosystem constituent using color information (for example, heat map) has attracted attention, the imparted color information would cover and hide the ecosystem constituent in some cases. Furthermore, although a technology of displaying the ecosystem constituent without covering or hiding the ecosystem constituent by displaying the ecosystem constituent in another space different from the space in which the ecosystem constituent is displayed, for example, has also attracted attention, the positions of display and presentation of the ecosystem constituent and the visualized information would be deviated from each other in some cases. This can lead to a failure in grasping the spatial relative position between the ecosystem constituent and the visualized information, making it difficult for the user to accurately grasp the association between the ecosystem constituent and the visualized information.

On the other hand, as described above, with the use of the conventional AR technology, there can be a case where the user has difficulty in accurately grasp the association between the ecosystem constituent and the visualized information. Because of this, there has been room for facilitating further improvement in usability.

In view of this, the present disclosure proposes novel and improved information processing apparatus, information processing method, and information processing program capable of facilitating further improvement in usability.

In the following description, the worker in a farm field is appropriately referred to as a **"user".** The user may be a user who undergoes AR experience as a worker in a farm field. In the embodiment, the user is not a worker of an actual farm field but a person to undergo AR experience as a farm field worker. Furthermore, hereinafter, a skilled person in the farm field who instructs the user is appropriately referred to as an "instructor". The instructor may be an instructor or an instructing body that instructs the user who undergoes AR experience as a worker in the farm field. In the embodiment, the instructor is an instructor or an instructing body that instructs the user who undergoes AR experience as the worker in the farm field, not a skilled person in the actual farm field.

Hereinafter, the target object according to the embodiment may be an object (virtual object) provided in AR representation at a position corresponding to the real space or an actual object (real object).

Hereinafter, a predetermined region including a plurality of target objects is appropriately set as a target range. Note that, in a case where the target object is a virtual object, the target range is a display range to be described below.

### <1.2. Configuration of information processing system>

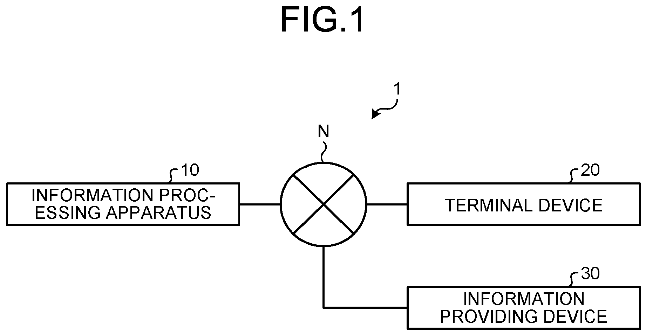

A configuration of an information processing system 1 according to the embodiment will be described. FIG. 1 is a diagram illustrating a configuration example of the information processing system 1. As illustrated in FIG. 1, the information processing system 1 includes an information processing apparatus 10, a terminal device 20, and an information providing device 30. The information processing apparatus 10 can be connected to various types of devices. For example, the terminal device 20 and the information providing device 30 are connected to the information processing apparatus 10, and information exchange is performed between the devices. The information processing apparatus 10 is wirelessly connected to the terminal device 20 and the information providing device 30. For example, the information processing apparatus 10 performs near field wireless communication using Bluetooth (registered trademark) with the terminal device 20 and the information providing device 30. Note that the terminal device 20 and the information providing device 30 may be connected to the information processing apparatus 10 in a wired channel or via a network.

### (1) Information processing apparatus 10

The information processing apparatus 10 is an information processing apparatus that performs processing for displaying information regarding visualized information for a target object. Specifically, the information processing apparatus 10 calculates a score (complexity) indicating the characteristic of the target object. Based on the calculated score, the information processing apparatus 10 provides control information for displaying information regarding the visualized information for the target object.

Furthermore, the information processing apparatus 10 also has a function of controlling the overall operation of the information processing system 1. For example, the information processing apparatus 10 controls the overall operation of the information processing system 1 based on information exchanged between individual devices. Specifically, the information processing apparatus 10 controls the visualized information displayed on the terminal device 20 based on the information received from the information providing device 30, for example.

The information processing apparatus 10 is implemented by a personal computer (PC), a work station (WS), or the like. Note that the information processing apparatus 10 is not limited to a PC, a WS, or the like. For example, the information processing apparatus 10 may be an information processing apparatus such as a PC or a WS equipped with a function as the information processing apparatus 10 as an application.

### (2) Terminal device 20

The terminal device 20 is a wearable device such as see-through eyewear (HoloLens) capable of outputting AR representation. Furthermore, the terminal device 20 may be a piece of terminal equipment such as a smartphone capable of outputting a mobile AR representation including ARCore (registered trademark) or ARKit (registered trademark). Furthermore, the terminal device 20 may be a video see-through AR device or XR device such as the XR-1 of Varjo (registered trademark).

The terminal device 20 displays information regarding the visualized information based on the control information provided from the information processing apparatus 10, for example.

### (3) Information providing device 30

The information providing device 30 is an information processing apparatus that provides information regarding the target range to the information processing apparatus 10. For example, the information processing apparatus 10 provides the information regarding the target range based on the information regarding acquisition of the information regarding the target range.

The information providing device 30 is implemented by a PC, a WS, or the like. Note that the information providing device 30 is not limited to a PC, a WS, or the like. For example, the information providing device 30 may be an information processing apparatus such as a PC or a WS equipped with a function as the information providing device 30 as an application.

### <<2. Implemented example of information processing system>>

The configuration of the information processing system 1 has been described above. Next, an implemented example of the information processing system 1 will be described. In the embodiment, a farm field is not an actual farm field but a simulated farm field for AR experience, and thus is appropriately referred to as an "AR farm field". Furthermore, in the embodiment, it is assumed that a user U11 wears see-through eyewear, with a restriction on the field angle. In addition, in the embodiment, it is assumed that there is a work place in the farm field. Furthermore, as an example of the target object, a virtual object will be described.

### <2.1. Confirmation of farm field and movement to work place>

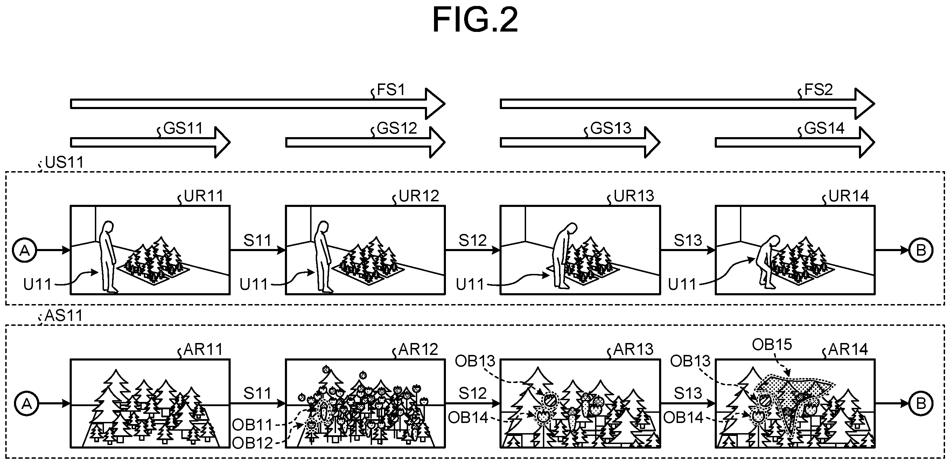

FIG. 2 is a diagram illustrating a scene FS1 in which the user U11 as a target of AR experience confirms the farm field and a scene FS2 in which the user U11 moves to the work place. FIG. 2 includes an action scene US11 indicating an action of the user U11 during the AR experience and an AR scene AS11 indicating the AR representation displayed together with the action of the user U11. Hereinafter, the action scene US and the AR scene AS will be described in association with each other. Note that action images UR11 to UR14 correspond to AR images AR11 to AR14, respectively.

FIG. 2 first illustrates an instruction scene GS11 in which the user U11 is instructed as "Let's start work. Hold the tomato seedling". The action image UR11 is an image illustrating a scene in which the user U11 holds a tomato seedling and waits at a place slightly away from the farm field. The AR image AR11 is an image indicating AR representation displayed on the terminal device 20. The AR image AR11 is in a state with no AR representation, and thus displays the entire background of the real space. Next, in response to an operation by the instructor, the information processing system 1 displays, in AR representation, a virtual object of the vegetation into the AR farm field (S11). Subsequently, the user U11 proceeds to an instruction scene GS12 instructed as "This is the view of the entire farm field".

The action image UR12 is an image indicating a scene in which the user U11 grasps the entire farm field by having an overhead view of the farm field. The AR image AR12 is an image indicating the AR representation displayed on the terminal device 20. In the AR image AR12, a virtual object of vegetation is displayed in the AR farm field. For example, the AR image AR12 includes a display of a virtual object OB11 of tomato, a virtual object OB12 of a carrot, and the like. In the AR image AR12, the virtual object OB11 and the virtual object OB12 are denoted by reference numerals as an example of the virtual object for convenience of description, but in addition, reference numerals may also be assigned to other virtual objects included in the AR image AR12. Note that a scene obtained by combining the instruction scene GS11 and the instruction scene GS12 is a scene FS1. Subsequently, the user U11 proceeds to an instruction scene GS13 instructed as "Come close to work place for today".

An action image UR13 is an image indicating a scene in which the user U11 approaches the work place. The information processing system 1 performs processing of limiting the display range of the virtual object of vegetation according to the action of the user U11 (S12). The AR image AR13 is an image indicating the AR representation displayed on the terminal device 20. The AR image AR13 has a limited display range of the virtual object of the vegetation displayed in the AR image AR12. For example, in the AR image AR13, the display range of the virtual object is limited such that only information that allows the user U11 to handle within a predetermined time (for example, within a time corresponding to a daily working time) is displayed. With this limitation, the information processing system 1 can accurately guide the user U11 to the work place. The AR image AR13 includes the display of a virtual object OB13 of potato, a virtual object OB14 of cabbage, for example. In the AR image AR13, the virtual object OB13 and the virtual object OB14 are denoted by reference numerals as an example of the virtual object for convenience of description, but in addition, reference numerals may also be assigned to other virtual objects included in the AR image AR13. Next, in response to the operation by the instructor, the information processing system 1 performs AR representation of virtual objects being visualized information visualizing the complexity (diversity) of vegetation (S13). Note that this complexity corresponds to either the score indicating the characteristic of the target object or height information corresponding to the score indicating the characteristic of the target object. Subsequently, the user U11 proceeds to an instruction scene GS14 including an instruction "This indicates complexity of the vegetation. Let's plant the seedlings in places with low complexity".

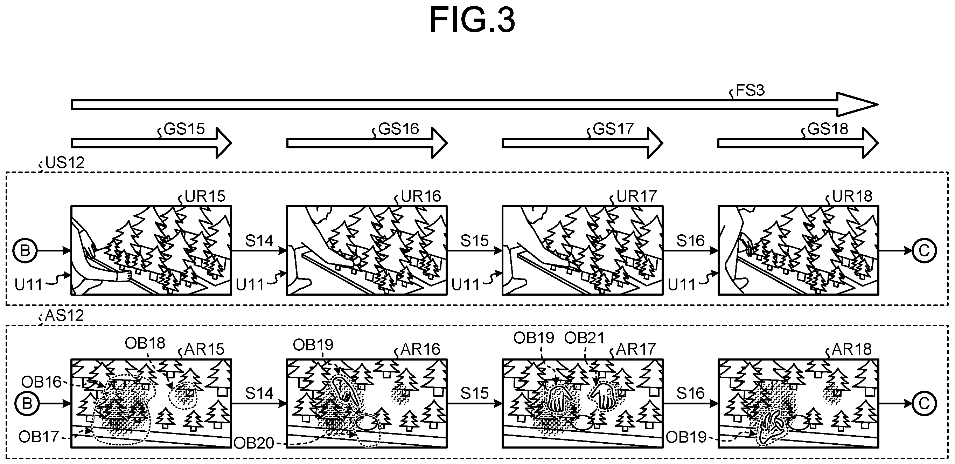

The action image UR14 is an image indicating a scene in which the user U11 confirms points for improvement. The AR image AR14 is an image indicating the AR representation displayed on the terminal device 20. The AR image AR14 displays a virtual object OB15 visualizing the complexity of vegetation in AR representation. The AR image AR14 displays, in AR representation, the virtual object OB15 that is a mesh three-dimensional graph indicating the complexity of vegetation, for example. The virtual object OB15 indicates the complexity of vegetation according to the height of the mesh three-dimensional graph. The virtual object OB15 indicates a relationship as to how the virtual object is related to the vegetation, for example. Furthermore, the downward recess of the virtual object OB15 indicates a location where the vegetation is not rich, that is, the work of the user U11 is necessary. This makes it possible for the information processing system 1 to accurately indicate a location requiring work to the user U11. Note that a scene FS2 is a combination of the instruction scene GS13 and the instruction scene GS14. The processing proceeds to the scene illustrated in FIG. 3.

### <2.2. Work>

FIG. 3 is a diagram illustrating a scene FS3 in which the user U11 performs AR experience of work. FIG. 3 includes: an action scene US12 indicating the action of the user U11; and an AR scene AS12 indicating the AR representation displayed in association with the action of the user U11. Hereinafter, the action scene US and the AR scene AS will be described in association with each other. Note that the action images UR15 to UR18 correspond to the AR images AR15 to AR18, respectively.

FIG. 3 includes an instruction scene GS15 in which the user U11 is instructed as "Let's squat down and work. Take care not to damage the roots". An action image UR15 is an image illustrating a scene in which the user U11 squats and waits. The AR image AR15 is an image indicating the AR representation displayed on the terminal device 20. In response to the operation by the instructor, the AR image AR15 displays a virtual object visualizing the range of the root of the vegetation. For example, the AR image AR15 display virtual objects OB16 to OB18 visualizing the range of the root of the vegetation, and the like. This makes it possible for the information processing system 1 to accurately indicate the root part of the vegetation that should not be damaged to the user U11. In the AR image AR15, the virtual object OB16 and the virtual object OB18 are denoted by reference numerals as an example of the virtual object for convenience of description, but in addition, reference numerals may also be assigned to other virtual objects included in the AR image AR15. Next, in response to the operation by the instructor, the information processing system 1 performs real-time AR representation of a virtual object visualizing the motion of the hand of the instructor (S14). This makes it possible for the instructor to accurately give a pointing instruction even from a remote location. Subsequently, the user U11 proceeds to an instruction scene GS16 instructed as "This seems to be a good place to plant the seedling".

The action image UR16 is an image illustrating a scene in which the user U11 plants tomato seedlings at a place instructed by the instructor. The AR image AR16 is an image indicating the AR representation displayed on the terminal device 20. In response to the operation by the instructor, the AR image AR16 performs real-time display of a virtual object visualizing the movement of the hand of the instructor. For example, the AR image AR16 displays a virtual object OB19 visualizing the movement of the hand of the instructor. The virtual object OB19 changes in real time according to the movement of the hand of the instructor. Furthermore, the AR image AR16 displays a virtual object visualizing a location requiring work according to the operation by the instructor. For example, the AR image AR16 displays a virtual object OB20 visualizing a location requiring work. With this configuration, the information processing system 1 can accurately give a pointing instruction to a location requiring work by performing AR representation of the portion requiring work together with the movement of the hand of the instructor. In the AR image AR16, the virtual object OB19 and the virtual object OB20 are denoted by reference numerals as an example of the virtual object for convenience of description, but in addition, reference numerals may also be assigned to other virtual objects included in the AR image AR16. Next, in response to the operation by the instructor, the information processing system 1 performs real-time AR representation of a virtual object visualizing detailed or model behavior indicated by the movement of the hand of the instructor (S15). With this configuration, the instructor can accurately instruct the method of work including nuances. Subsequently, the user U11 proceeds to an instruction scene GS17 instructed as "Cover with soil like this".

The action image UR17 is an image illustrating a scene in which the user U11 covers the seedlings with soil following the model behavior indicated by the instructor. The AR image AR17 is an image indicating the AR representation displayed on the terminal device 20. In response to the operation by the instructor, the AR image AR17 performs real-time display of a virtual object visualizing the movement of the hand of the instructor. For example, the AR image AR17 displays a virtual object OB19 and a virtual object OB21 visualizing the movement of the hand of the instructor. The virtual object OB19 changes in real time according to the movement of the right hand of the instructor. The virtual object OB21 changes in real time according to the movement of the left hand of the instructor. With this configuration, the information processing system 1 performs AR representation of the movement of both hands of the instructor, making it possible to perform pointing instruction more accurately. In the AR image AR17, the virtual object OB19 and the virtual object OB21 are denoted by reference numerals as an example of the virtual object for convenience of description, but in addition, reference numerals may also be assigned to other virtual objects included in the AR image AR17. Next, in response to the operation by the instructor, the information processing system 1 performs real-time AR representation of a virtual object visualizing feedback indicated by the movement of the hand of the instructor (S16). With this operation, the instructor can reassure the user U11 by indicating the feedback. Subsequently, the user U11 proceeds to an instruction scene GS18 instructing "That seems to be good".

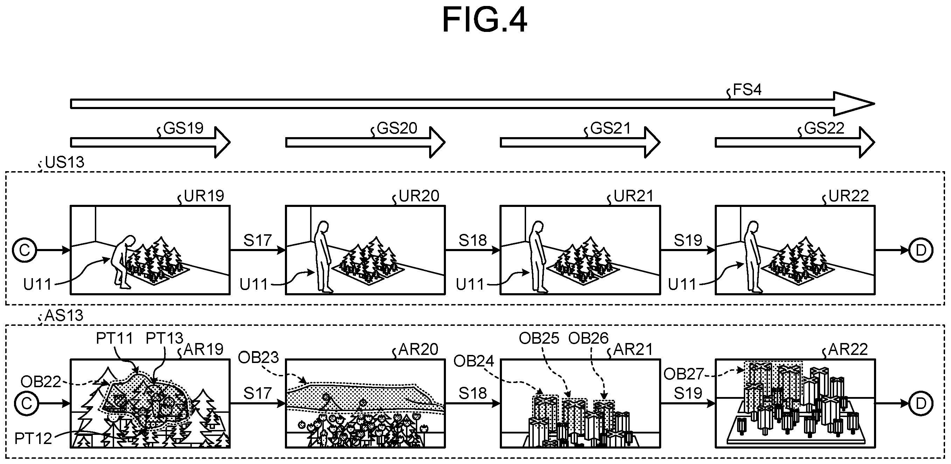

The action image UR18 is an image indicating a scene in which the user U11 confirms the feedback from the instructor and stands up. The AR image AR18 is an image indicating the AR representation displayed on the terminal device 20. In response to the operation by the instructor, the AR image AR18 performs real-time display of a virtual object visualizing the movement of the hand of the instructor indicating the feedback. For example, the AR image AR18 displays a virtual object OB19 visualizing the movement of the hand of the instructor indicating the feedback. The virtual object OB19 changes in real time according to the movement of the hand of the instructor indicating the feedback. With this configuration, the information processing system 1 performs AR representation of the feedback of the instructor, making it possible to perform pointing instruction more accurately. In the AR image AR18, the virtual object OB19 is denoted by reference numeral as an example of the virtual object for convenience of description, but in addition, reference numerals may also be assigned to other virtual objects included in the AR image AR18. Note that a scene FS3 is a combination of the instruction scenes GS15 to GS18. The processing proceeds to the scene illustrated in FIG. 4.

### <2.3. Confirmation after work>

FIG. 4 is a diagram illustrating a scene FS4 of confirming the work performed by the user U11. FIG. 4 includes: an action scene US13 indicating the action of the user U11; and an AR scene AS13 indicating the AR representation displayed in association with the action of the user U11. Hereinafter, the action scene US and the AR scene AS will be described in association with each other. Note that the action images UR19 to UR22 correspond to the AR images AR19 to AR22, respectively.

FIG. 4 illustrates an instruction scene GS19 in which the user U11 is instructed as "Higher diversity has been obtained". The action image UR19 is an image illustrating a scene in which the user U11 reviews a portion where work has been performed. The AR image AR19 is an image indicating the AR representation displayed on the terminal device 20. In response to the operation by the instructor, the AR image AR19 displays, in AR representation, a virtual object OB22 visualizing the complexity of the vegetation. The AR image AR19 displays, in AR representation, the virtual object OB22 that is a mesh three-dimensional graph indicating the complexity of vegetation, for example. The virtual object OB22 indicates the complexity according to the difference in height. For example, the virtual object OB22 indicates that a location PT11 has high complexity and rich vegetation. In addition, the virtual object OB22 indicates that a location PT12 has low complexity and non-rich (poor) vegetation. Furthermore, a location PT13 is a location where the user U11 has planted a seedling in the scene FS3. The virtual object OB22 indicates that the location PT13 has higher complexity and richer vegetation now. With this configuration, the information processing system 1 can allow the user U11 to feel the effect of work. In the AR image AR19, the virtual object OB22 is denoted by reference numeral as an example of the virtual object for convenience of description, but in addition, reference numerals may also be assigned to other virtual objects included in the AR image AR19. Next, in response to the operation by the instructor, the information processing system 1 displays, in AR representation, the virtual object visualizing the complexity of the entire farm field (S17). With this operation, the instructor can make it easier for the user U11 to find other points for improvement. Subsequently, the user U11 proceeds to an instruction scene GS20 instructed as "Entire farm field seems to be good".

The action image UR20 is an image illustrating a scene in which the user U11 looks out from a place slightly away from the farm field. The AR image AR20 is an image indicating the AR representation displayed on the terminal device 20. In response to the operation by the instructor, the AR image AR20 displays, in AR representation, a virtual object OB23 visualizing the complexity of the vegetation in the entire farm field. The AR image AR20 displays, in AR representation, the virtual object OB23 that is a mesh three-dimensional graph indicating the complexity of vegetation in the entire farm field, for example. This makes it possible for the information processing system 1 to accurately indicate other points for improvement to the user U11. In the AR image AR20, the virtual object OB23 is denoted by reference numeral as an example of the virtual object for convenience of description, but in addition, reference numerals may also be assigned to other virtual objects included in the AR image AR20. Next, in response to the operation by the instructor, the information processing system 1 displays, in AR representation, a virtual object visualizing a predicted future vegetation growth degree (S18). With this configuration, the instructor can raise the motivation of the user U11. Subsequently, the user U11 proceeds to an instruction scene GS21 instructing "Interested in the growth. Let's see how it grows two months from now".

An action image UR21 is an image indicating a scene in which the user U11 observes the entire farm field. The AR image AR21 is an image indicating the AR representation displayed on the terminal device 20. In response to the operation by the instructor, the AR image AR21 displays a virtual object visualizing predicted growth of the vegetation in the future. For example, the AR image AR21 displays virtual objects OB24 to OB26 and the like visualizing the predicted vegetation growth in the future. With this configuration, the information processing system 1 can facilitate further improvement in the motivation of the user U11. In the AR image AR21, the virtual objects OB24 to OB26 are denoted by reference numerals as an example of the virtual object for convenience of description, but in addition, reference numerals may also be assigned to other virtual objects included in the AR image AR21. Next, in response to the operation by the instructor, the information processing system 1 displays, in AR representation, a virtual object visualizing a predicted future vegetation growth in a predicted harvest time (S19). With this configuration, the instructor can make it easier for the user U11 to determine the harvest time. Subsequently, the user U11 proceeds to an instruction scene GS22 instructing "Will grow like this in the harvest time. Can be harvested in this size."

An action image UR22 is an image indicating a scene in which the user U11 observes the entire farm field. The AR image AR22 is an image indicating the AR representation displayed on the terminal device 20. In response to the operation by the instructor, the AR image AR21 displays, in AR representation, a virtual object OB27 visualizing predicted growth of the vegetation in the harvest time, and the like. With this configuration, the information processing system 1 can facilitate further improvement in the motivation of the user U11 for the harvest. In the AR image AR22, the virtual object OB27 is denoted by reference numeral as an example of the virtual object for convenience of description, but in addition, reference numerals may also be assigned to other virtual objects included in the AR image AR22. Note that a scene FS4 is a combination of the instruction scenes GS19 to GS22.

An implemented example of the information processing system 1 has been described above with reference to the scenes FS1 to FS4.

### <<3. Function of information processing system>>

Next, functions of the information processing system 1 will be described.

### <3.1. Outline of functions>

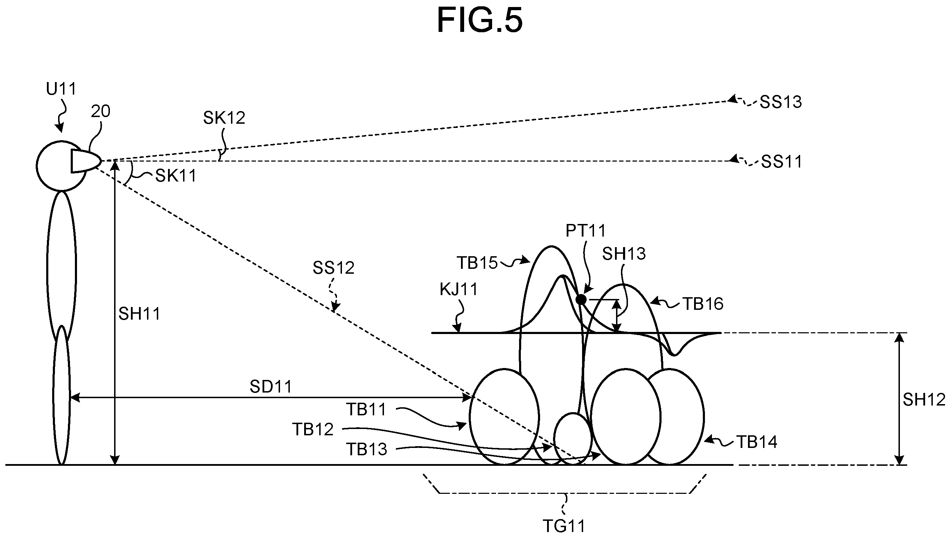

FIG. 5 is a diagram illustrating an outline of functions of the information processing system 1 according to the embodiment. FIG. 5 illustrates a case where the user U11 sets a gaze line to a target range TG11 including a target object TB11 and the like. In addition, visualized information KJ11 is displayed for the target range TG11. Here, a distance SD11 indicates a relative horizontal distance between the user U11 and the target range TG11. A height SH11 indicates the height of the viewpoint of user U11 from the floor surface. The height SH12 indicates a reference height of the visualized information KJ11 to be displayed from the floor surface. The height SH13 indicates the height of the visualized information KJ11 at the point PT11 from the reference height of the visualized information KJ11. Note that the height SH13 indicates irregularity (complexity) of the visualized information KJ11. An angle SK11 indicates a viewing angle at which the user U11 feels comfortable in moving eyes while directing the gaze line forward. The angle SK11 is a viewing angle of 30 degrees or less, for example. An angle SK12 indicates a viewing angle at which the user U11 can look upward with eye movement while directing the gaze line forward. The angle SK12 is a viewing angle of 5 degrees or less, for example. A gaze line SS11 indicates a gaze line of the user U11 in a direction horizontal to the ground from the viewpoint of the user U11. A gaze line SS12 indicates a gaze line of the user U11 in a direction of the angle SK11 from the viewpoint of the user U11. A gaze line SS13 indicates a gaze line of the user U11 in a direction of the angle SK12 from the viewpoint of the user U11.

### <3.2. Functional configuration example>

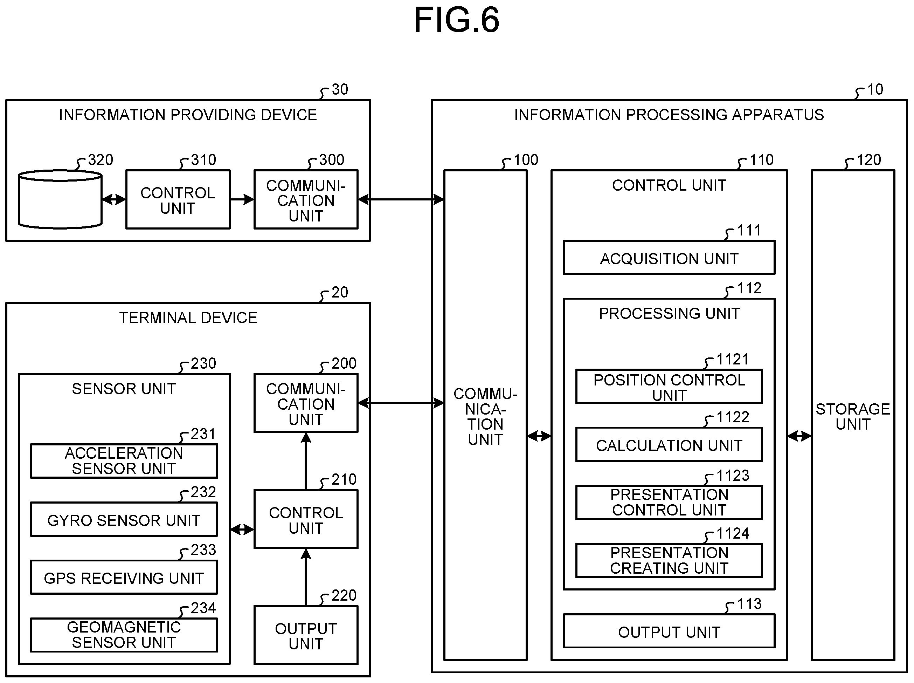

FIG. 6 is a block diagram illustrating a functional configuration example of the information processing system 1 according to the embodiment.

### (1) Information processing apparatus 10

As illustrated in FIG. 6, the information processing apparatus 10 includes a communication unit 100, a control unit 110, and a storage unit 120. Note that the information processing apparatus 10 includes at least the control unit 110.

### (1-1) Communication unit 100

The communication unit 100 has a function of communicating with an external device. For example, in communication with an external device, the communication unit 100 outputs information received from the external device to the control unit 110. Specifically, the communication unit 100 outputs information received from the information providing device 30 to the control unit 110. For example, the communication unit 100 outputs information regarding the target range to the control unit 110.

For example, in communication with an external device, the communication unit 100 transmits information input from the control unit 110 to the external device. Specifically, the communication unit 100 transmits information regarding acquisition of the information regarding the target range input from the control unit 110 to the information providing device 30.

### (1-2) Control unit 110

The control unit 110 has a function of controlling the operation of the information processing apparatus 10. For example, the control unit 110 performs processing for displaying information regarding the visualized information for the target object based on the score indicating the characteristic of the target object.

In order to implement the above-described functions, the control unit 110 includes an acquisition unit 111, a processing unit 112, and an output unit 113 as illustrated in FIG. 6.

### · Acquisition unit 111

The acquisition unit 111 has a function of acquiring information for displaying information regarding the visualized information for the target object. The acquisition unit 111 acquires sensor information transmitted from the terminal device 20 via the communication unit 100, for example. For example, the acquisition unit 111 acquires sensor information for specifying information regarding the position of the terminal device 20, such as acceleration information, gyro information, global positioning system (GPS) information, and geomagnetic information.

The acquisition unit 111 acquires information regarding the target range transmitted from the information providing device 30 via the communication unit 100, for example. For example, the acquisition unit 111 acquires information regarding a plurality of handled objects included in the target range.

### · Processing unit 112

The processing unit 112 has a function for controlling processing of the information processing apparatus 10. As illustrated in FIG. 6, the processing unit 112 includes a position control unit 1121, a calculation unit 1122, a presentation control unit 1123, and a presentation creating unit 1124.

### · Position control unit 1121

The position control unit 1121 has a function of determining information regarding the position of the user having the terminal device 20. The position control unit 1121 determines information regarding the position of the user based on the information regarding the position of the terminal device 20. The position control unit 1121 determines, for example, information regarding the relative position of the user with respect to the target object. For example, the position control unit 1121 determines a relative horizontal distance between the target object and the user. Specifically, the position control unit 1121 determines information regarding the position of the user based on at least one of acceleration information, gyro information, GPS information, and geomagnetic information. Furthermore, the position control unit 1121 determines, for example, information regarding the position of the user from the target range. Specifically, the position control unit 1121 determines information regarding the position of the user from a position where a straight line connecting the center of the target range and the user intersects one side of the target range.

### · Calculation unit 1122

The calculation unit 1122 has a function of calculating a score indicating the characteristic of the target object. The calculation unit 1122 calculates a score of each of a plurality of target objects included in the target range. Furthermore, the calculation unit 1122 may calculate a score indicating a relationship between a plurality of target objects included in the target range. For example, the calculation unit 1122 may calculate a score indicating a relationship between target objects adjacent to each other. Specifically, the calculation unit 1122 may calculate a score indicating a relationship between a plurality of target objects, such as a personal relationship in town, product management in a warehouse, personnel allocation in a work place such as an office, an excitement degree in a venue of an event or the like. In this case, the target object is an object such as a person or a product in a specific environment. Note that, in a case where the target object is related to vegetation, the calculation unit 1122 may calculate a score indicating a characteristic of the target object related to vegetation.

The calculation unit 1122 calculates a score based on the information regarding the target range transmitted from the information providing device 30 via the communication unit 100, for example.

The calculation unit 1122 converts the score into height information corresponding to the calculated score. For example, the calculation unit 1122 converts the calculated score into the height information based on association information that has associated the score and the height information beforehand.

### · Presentation control unit 1123

The presentation control unit 1123 has a function of determining information regarding the height of the visualized information displayed for the target object. For example, the presentation control unit 1123 determines information regarding a height at which the user can comfortably view the visualized information. For example, the presentation control unit 1123 determines information regarding the height at which the user can comfortably view the visualized information based on information regarding the position of the user with respect to the target object, information regarding the height of the viewpoint of the user, and information regarding the viewing angle of the user. Specifically, the presentation control unit 1123 determines the height of the visualized information to be displayed to be a height that falls within the field angle of the display field angle of the terminal device 20, determined based on the information regarding the position of the user with respect to the target object, the information regarding the height of the viewpoint of the user, and the information regarding the viewing angle of the user.

The presentation control unit 1123 determines information regarding the height of the visualized information based on a target visual field range indicating a visual field range in which the user can comfortably view the visualized information. The following Formula (1) is an example of a calculation formula for determining the height of the visualized information so that the visual field of the user falls within the range of the target visual field range. Note that, in the following Formula (1), the upper limit of the target visual field range is 5 degrees upward from the user's viewpoint, and the lower limit of the target visual field range is 30 degrees downward from the user's viewpoint. $- 5 ° < {tan}^{- 1} \frac{{h}_{obj} - {h}_{eye}}{{D}_{dis}} \times \frac{180}{π} < 30 °$ (1)

In the formula, Hobj represents the height of the visualized information. Heye represents the height of the user's viewpoint. Ddis represents a distance between the user and the target range.

The presentation control unit 1123 determines information regarding the reference height of the visualized information. Note that the reference height of the visualized information is a reference value (for example, the mean) of the height of the visualized information at each point, for example. For example, the presentation control unit 1123 sets the height based on the height of the target object included in the target range as the reference height of the visualized information. Specifically, the presentation control unit 1123 set the height based on the height of the target object included in the target range, specifically, a height based on the maximum value, mean, mode, or minimum value of the height of the target object, as the reference height of the visualized information.

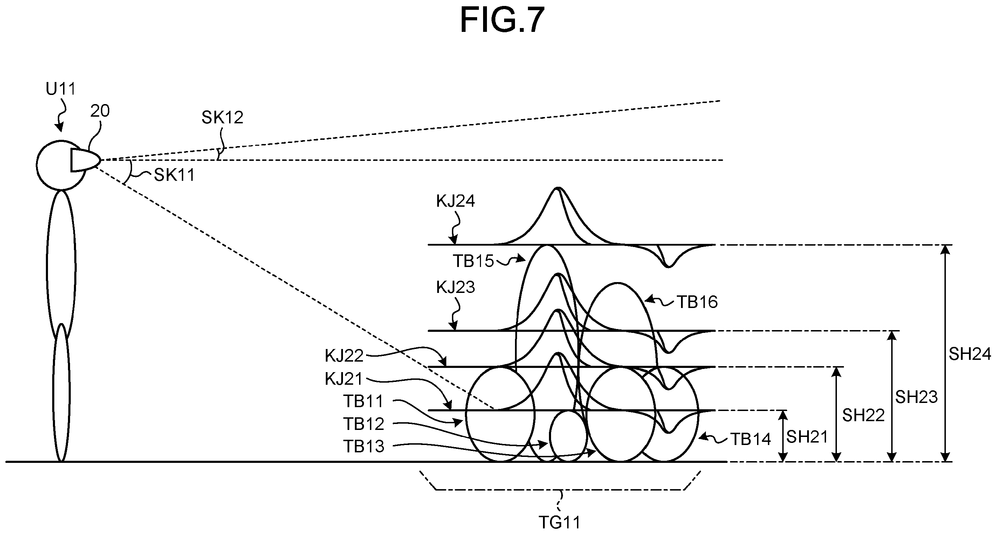

FIG. 7 illustrates an example of the reference height of the visualized information determined by the presentation control unit 1123. A height SH21 is a height of a target object TB12 having the minimum height among the target objects included in a target range TG21. The presentation creating unit 1124 performs processing for displaying visualized information KJ21 based on the height SH21. A height SH22 is a mode of the heights of the target objects included in the target range TG21. Specifically, the height SH22 is the height of the target object TB11, a target object TB13, and a target object TB14. The presentation creating unit 1124 performs processing for displaying visualized information KJ22 based on the height SH22. A height SH23 is the mean (average) of the heights of the target objects included in the target range TG21. Specifically, the height SH23 is an average of the heights of the target objects TB11 to TB16. The presentation creating unit 1124 performs processing for displaying visualized information KJ23 based on the height SH23. A height SH24 is a height of the target object TB15 having the maximum height among the target objects included in a target range TG24. The presentation creating unit 1124 performs processing for displaying visualized information KJ24 based on the height SH24.

The presentation control unit 1123 determines an offset for determining the reference height of the visualized information. The offset is a height for adjusting the height to a height at which the user can comfortably view the target object and the visualized information. For example, the offset is a height for displaying the visualized information at a height separated from the target object in the upward direction by a predetermined distance. Specifically, the offset is a height for displaying the visualized information at a height separated by a predetermined distance, which is a distance at which the user can comfortably view the target object. The offset is a height determined based on the height of the target object and the height of the visualized information to be displayed. The presentation control unit 1123 determines the reference height of the visualized information based on the height information based on the height of the target object including the offset.

The presentation control unit 1123 adjusts the height of the visualized information so as to be included in a height range based on the target visual field range. For example, the presentation control unit 1123 sets the offset so as to be included in the height range based on the target visual field range. The presentation control unit 1123 determines the adjusted height of the visualized information as the reference height of the visualized information.

The presentation control unit 1123 determines information regarding the height of the visualized information at each point. The presentation control unit 1123 determines information regarding the height from the reference height of the visualized information based on the irregularity (complexity) of the visualized information. For example, the presentation control unit 1123 determines a height corresponding to the score calculated by the calculation unit 1122 as the height of the visualized information at each point with respect to the reference height of the visualized information. The presentation control unit 1123 determines the height of the visualized information at each point based on the reference height of the visualized information and the height based on the irregularity (complexity) of the visualized information. For example, the height of the visualized information at each point is determined by combining the reference height of the visualized information with the height based on the irregularity (complexity) of the visualized information. The presentation control unit 1123 determines information regarding the height of the visualized information based on the height information corresponding to the score of each of the plurality of target objects included in the target range.

The presentation control unit 1123 determines information regarding a timing to display the visualized information for the target object. For example, the presentation control unit 1123 makes a determination such that, when the user approaches a predetermined distance from the target object, visualized information will be displayed for the target object based on information regarding the position of the user.

### · Presentation creating unit 1124

The presentation creating unit 1124 has a function of controlling the visualized information to be displayed for the target object. The presentation creating unit 1124 controls visualized information to be displayed for a target range including a plurality of target objects.

The presentation creating unit 1124 controls the visualized information to be displayed for the target object based on the information regarding the height of the visualized information determined by the presentation control unit 1123, for example. In addition, the presentation creating unit 1124 controls the visualized information to be displayed for the target object based on the information regarding the timing determined by the presentation control unit 1123, for example. Furthermore, the presentation creating unit 1124 controls the visualized information to be displayed for the target object based on the height information corresponding to the score calculated by the calculation unit 1122, for example.

The presentation creating unit 1124 performs control for displaying the visualized information for the target object. For example, the presentation creating unit 1124 may perform control for displaying height of the visualized information determined by the presentation control unit 1123, that is, control for displaying the visualized information represented by a mesh three-dimensional graph. For example, the presentation creating unit 1124 may perform control for displaying the visualized information in which the score indicating the characteristic of the target object is represented by a mesh three-dimensional graph.

According to the invention, the presentation creating unit 1124 performs control for displaying the visualized information in which information regarding the height of the visualized information determined by the presentation control unit 1123 is represented by a three-dimensional path (Path). The presentation creating unit 1124 performs control for displaying the visualized information in which the score indicating the relationship between the plurality of target objects is represented by the three-dimensional path. Specifically, the presentation creating unit 1124 may perform control for displaying the visualized information in which a score indicating a relationship between a plurality of target objects, such as a personal relationship in town, product management in a warehouse, personnel allocation in a work place such as an office, an excitement degree in a venue of an event or the like, is represented by a three-dimensional path.

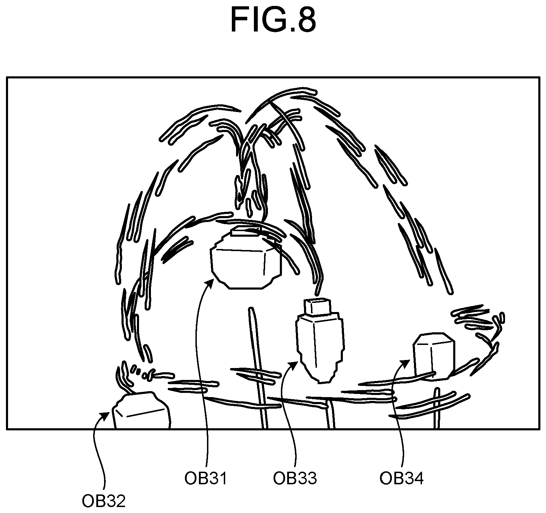

FIG. 8 illustrates an example of the visualized information indicated by a three-dimensional path. Virtual objects OB31 to OB34 are target objects included in an identical target range. In FIG. 8, lines indicating paths from each virtual object indicates a relationship between virtual objects. For example, the virtual object OB31 has a relationship with any of the virtual objects OB32 to OB34. Therefore, the presentation creating unit 1124 may perform control for displaying the virtual object OB31 so as to be connected to any of the virtual objects OB32 to OB34 by a path. Furthermore, the presentation creating unit 1124 may perform control for displaying the virtual object such that the stronger the relationship with another virtual object, the higher the density of the path used for the connection. With this configuration, the presentation creating unit 1124 can make it easy for the user to grasp the target objects having influence on the plurality of target objects via the density of the paths. Furthermore, in a case where the target object relates to vegetation, the presentation creating unit 1124 can make it easy for the user to grasp a plant to be a hub having influence on various points.

For example, in a case where the height difference based on the height information indicating the transition of the visualized information is equal to more than a predetermined threshold, the presentation creating unit 1124 may perform control for displaying the visualized information in a specific mode. For example, the presentation creating unit 1124 compares the height information of the visualized information based on the information regarding the past target range with the height information of the visualized information based on the information regarding the current target range. The presentation creating unit 1124 may then perform control for dynamically displaying the visualized information of the point where the difference in the height information is equal to or more than the predetermined threshold by using animated illustrations or the like.

### · Output unit 113

The output unit 113 has a function of outputting information regarding the visualized information. The output unit 113 outputs information regarding the visualized information based on the processing by the processing unit 112. For example, the output unit 113 outputs the visualized information to the target object under the control of the presentation creating unit 1124. Furthermore, the output unit 113 outputs the visualized information for the target object based on the height information corresponding to the score calculated by the calculation unit 1122, for example.

The output unit 113 may output tag information. For example, the output unit 113 may output tag information regarding the target object so as to be displayed for the target object as the information regarding the visualized information. Furthermore, for example, the output unit 113 may output the tag information regarding the target object so as to be displayed with respect to the output visualized information. The output unit 113 may output tag information such that the tag information is displayed at a position where the user can comfortably view the target object or the visualized information.

The output unit 113 provides information regarding visualized information to be displayed for the target object. For example, the output unit 113 provides control information for outputting the visualized information via the communication unit 100. Note that the output unit 113 may provide control information for outputting tag information.

### (1-3) Storage unit 120

The storage unit 120 is implemented by semiconductor memory elements such as random access memory (RAM) and flash drives, or storage devices such as a hard disk or an optical disk. The storage unit 120 has a function of storing data related to processing in the information processing apparatus 10.

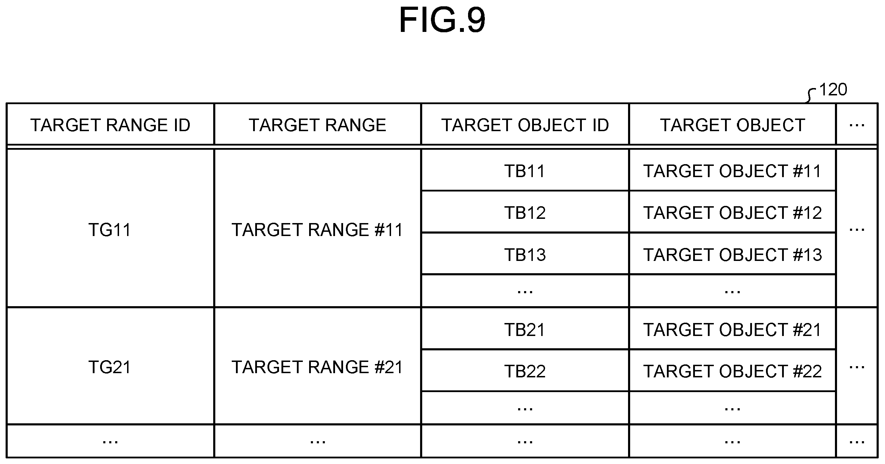

FIG. 9 illustrates an example of the storage unit 120. The storage unit 120 illustrated in FIG. 9 stores information regarding a target range including a plurality of target objects. As illustrated in FIG. 9, the storage unit 120 may include items such as "target range ID", "target range", "target object ID", and "target object".

The "target range ID" indicates identification information for identifying the target range. The "target range" indicates information regarding the target range. Although the example illustrated in FIG. 9 is a case where conceptual information such as "target range #11" and "target range #12" is stored in "target range", coordinate information is stored in "target range" in practice. The "target object ID" indicates identification information for identifying a target object. The "object" indicates information regarding the target object. The example illustrated in FIG. 9 is a case where conceptual information such as "target object #11" and "target object #12" is stored in "target object". However, information for specifying the target object such as an attribute and a type of the target object is stored in "target object" in practice. The "target object" may store information indicating a relationship with another target object.

### (2) Terminal device 20

As illustrated in FIG. 6, the terminal device 20 includes a communication unit 200, a control unit 210, an output unit 220, and a sensor unit 230.

### (2-1) Communication unit 200

The communication unit 200 has a function of communicating with an external device. For example, in communication with an external device, the communication unit 200 outputs information received from the external device to the control unit 210. Specifically, the communication unit 200 outputs information regarding the visualized information received from the information processing apparatus 10 to the control unit 210.

### (2-2) Control unit 210

The control unit 210 has a function of controlling the overall operation of the terminal device 20. For example, the control unit 210 performs processing of controlling output of information regarding the visualized information.

### (2-3) Output unit 220

The output unit 220 has a function of outputting information regarding the visualized information. For example, the output unit 220 displays, in AR representation, information regarding the visualized information.

### (2-4) Sensor unit 230

The sensor unit 230 has a function of acquiring sensor information measured by each measuring instrument. For example, the sensor unit 230 acquires sensor information such as acceleration information, gyro information, GPS information, and geomagnetic information. As illustrated in FIG. 6, the sensor unit 230 may include an acceleration sensor unit 231, a gyro sensor unit 232, a GPS receiving unit 233, and a geomagnetic sensor unit 234.

### (3) Information providing device 30

As illustrated in FIG. 6, the information providing device 30 includes a communication unit 300, a control unit 310, and a storage unit 320.

### (3-1) Communication unit 300

The communication unit 300 has a function of communicating with an external device. For example, in communication with an external device, the communication unit 300 outputs information received from the external device to the control unit 310. Specifically, the communication unit 300 outputs information received from the information processing apparatus 10 to the control unit 310. For example, the communication unit 300 outputs information regarding acquisition of information regarding the target range to the control unit 310.

### (3-2) Control Unit 310

The control unit 310 has a function of controlling the operation of the information providing device 30. For example, the control unit 310 transmits information regarding the target range to the information processing apparatus 10 via the communication unit 300. For example, the control unit 310 transmits information regarding the target range acquired by accessing the storage unit 320 to the information processing apparatus 10.

### (3-3) Storage unit 320

The storage unit 320 stores information similar to the information stored in the storage unit 120. Therefore, description of the storage unit 320 is omitted.

### <3.3. Processing of information processing system>

The functions of the information processing system 1 according to the embodiment have been described above. Next, processing of the information processing system 1 will be described.

### (1) Processing 1 in information processing apparatus 10: control based on position information

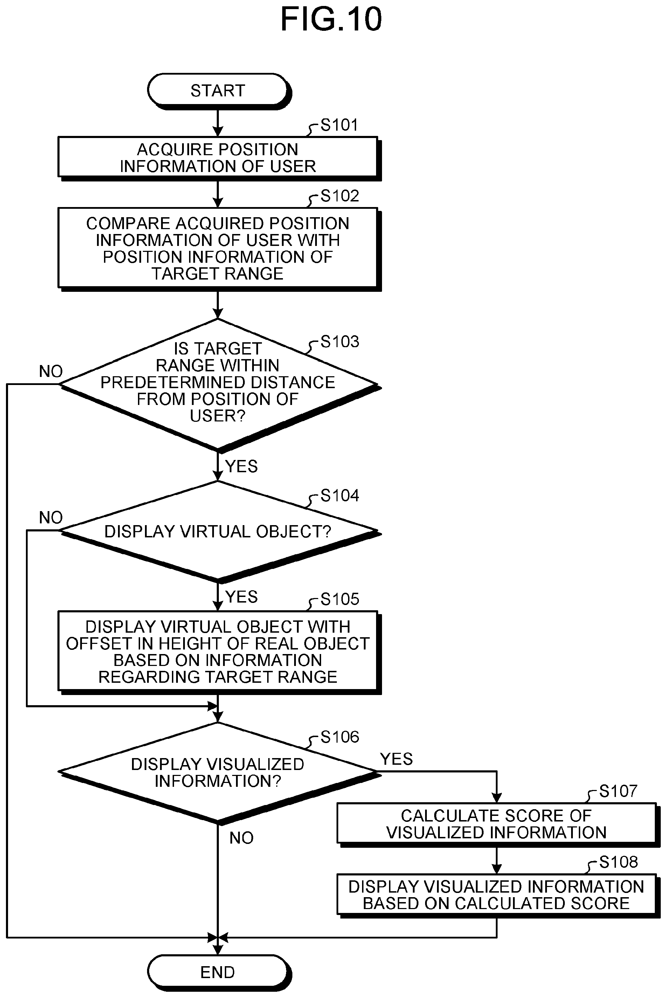

FIG. 10 is a flowchart illustrating a flow of processing in the information processing apparatus 10 according to the embodiment. Specifically, the figure illustrates the flow of processing in which the information processing apparatus 10 controls the display of the virtual object based on position information regarding the user and the information regarding the target range. First, the information processing apparatus 10 acquires position information regarding the user (S101). Next, the information processing apparatus 10 compares the position information regarding the user with the position information regarding the target range (S102). For example, the information processing apparatus 10 accesses the storage unit 120 and performs the comparison by using the position information regarding the target range stored in the storage unit 120. Next, the information processing apparatus 10 determines whether there is a target range within a predetermined distance from the position of the user (S103). In a case where there is no target range within a predetermined distance from the position of the user (S103; NO) the information processing apparatus 10 ends the information processing. In a case where the target range is within a predetermined distance from the position of the user (step S103; YES), the information processing apparatus 10 determines whether to display the virtual object (S104).

In a case where the information processing apparatus 10 determines not to display the virtual object (S104; NO), the processing proceeds to step S106 described below. Furthermore, when having determined to display the virtual object (S104; YES), the information processing apparatus 10 displays the virtual object with the offset in the height of the real object based on the information regarding the target range (S105). Subsequently, the information processing apparatus 10 determines whether to display the visualized information (S106).

When having determined not to display the visualized information (S106; NO) the information processing apparatus 10 ends the information processing. When having determined to display the visualized information (S106; YES), the information processing apparatus 10 calculates a score of the visualized information (S107). The information processing apparatus 10 may provide the information regarding the target range to an external information processing apparatus and allow the external information processing apparatus to calculate the score of the visualized information. Then, the information processing apparatus 10 displays the visualized information based on the calculated score (S108). For example, the information processing apparatus 10 displays the visualized information based on the score calculated by the external information processing apparatus. When having determined in step S104 that the virtual object is not to be displayed, the information processing apparatus 10 displays the visualized information for the real object. When having determined in step S104 that the virtual object is to be displayed, the information processing apparatus 10 displays the visualized information for the virtual object to be displayed.

### (2) Processing 2 in information processing apparatus 10: visualized information height control 1

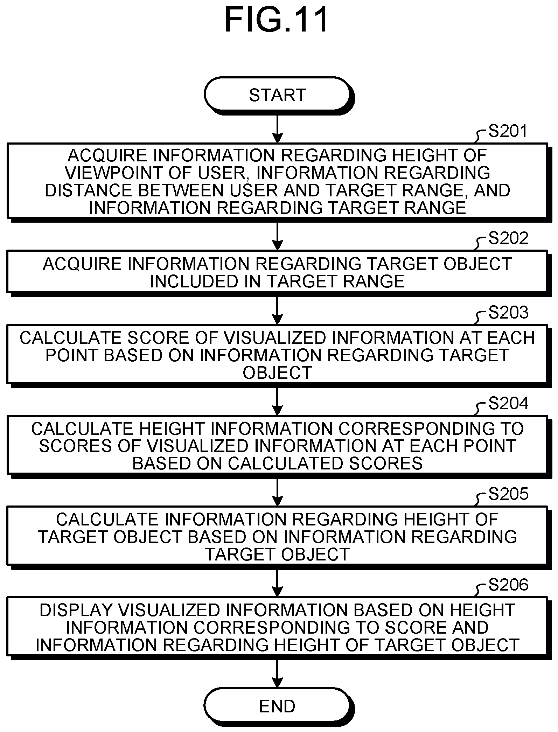

FIG. 11 is a flowchart illustrating a flow of processing in the information processing apparatus 10 according to the embodiment. Specifically, the figure illustrates a flow of processing in which the information processing apparatus 10 controls the display height of the visualized information based on information regarding the height of the viewpoint of the user, information regarding the distance between the user and the target range (for example, the relative horizontal distance), and information regarding the target range. First, the information processing apparatus 10 acquires information regarding the height of the viewpoint of the user, information regarding the distance between the user and the target range, and information regarding the target range (S201). Next, the information processing apparatus 10 acquires information regarding the target object included in the target range (S202). As a specific example, in a case where the target object relates to vegetation, the information processing apparatus 10 acquires information regarding vegetation planted in each point in the target range.

The information processing apparatus 10 calculates the score of the visualized information at each point based on the information regarding the target object (S203). For example, in a case where the target object relates to vegetation, the information processing apparatus 10 calculates a score related to vegetation planted in each point of the target range. Next, the information processing apparatus 10 calculates height information corresponding to the score of the visualized information at each point based on the calculated score (S204). For example, the information processing apparatus 10 normalizes the height information corresponding to the score of the visualized information at each point based on a difference between the calculated maximum value and minimum value of the score at each point. The information processing apparatus 10 then calculates information regarding the height of the target object based on the information regarding the target object (S205). For example, in a case where the target object relates to vegetation, the information processing apparatus 10 calculates information regarding the height of vegetation planted in the target range based on information regarding vegetation planted in each point of the target range. Then, the information processing apparatus 10 displays visualized information based on the information regarding the normalized score and the information regarding the height of the target object (S206). For example, the information processing apparatus 10 displays, in AR representation, the mesh three-dimensional graph.

### (3) Processing 3 in information processing apparatus 10: visualized information height control 2

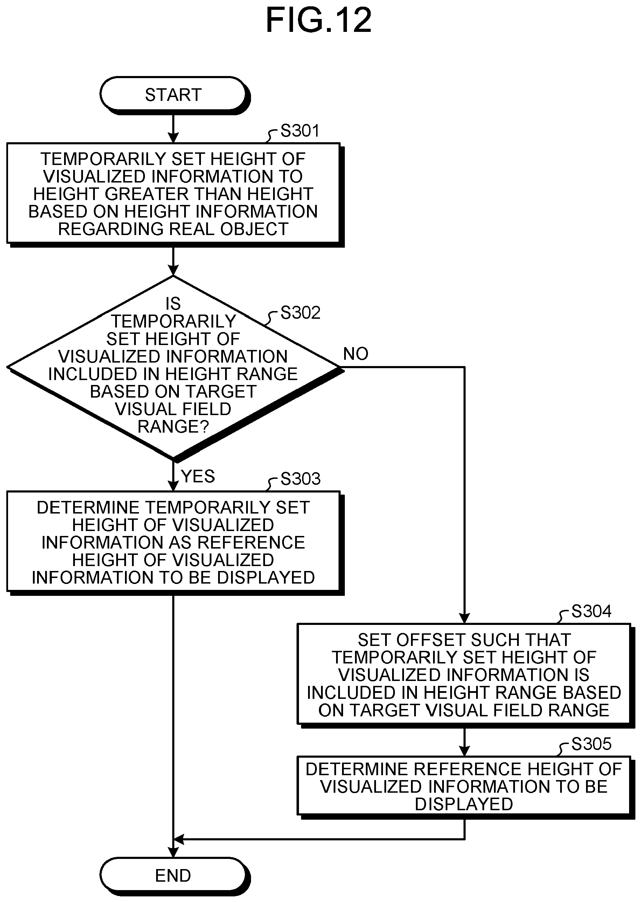

FIG. 12 is a flowchart illustrating a flow of processing in the information processing apparatus 10 according to the embodiment. Specifically, the figure illustrates a flow of processing in which the information processing apparatus 10 controls the display height of the visualized information based on the offset. First, the information processing apparatus 10 temporarily sets the height of the visualized information to a height greater than the height based on the height information of the real object (S301). For example, the information processing apparatus 10 temporarily sets the height of the visualized information to a height greater than the average height of the real object. Next, the information processing apparatus 10 determines whether the temporarily set height of the visualized information is included in the height range based on the target visual field range (S302). When the temporarily set height of the visualized information is included in the height range based on the target visual field range (S302; YES), the information processing apparatus 10 determines the temporarily set height of the visualized information as the reference height of the visualized information to be displayed (S303). When the temporarily set height of the visualized information is not included in the height range based on the target visual field range (step S302; NO), the information processing apparatus 10 sets the offset such that the temporarily set height of the visualized information is included in the height range based on the target visual field range (S304). The information processing apparatus 10 then determines the reference height of the visualized information to be displayed (S305).

### (4) Processing 4 in information processing apparatus 10: visualized information display control

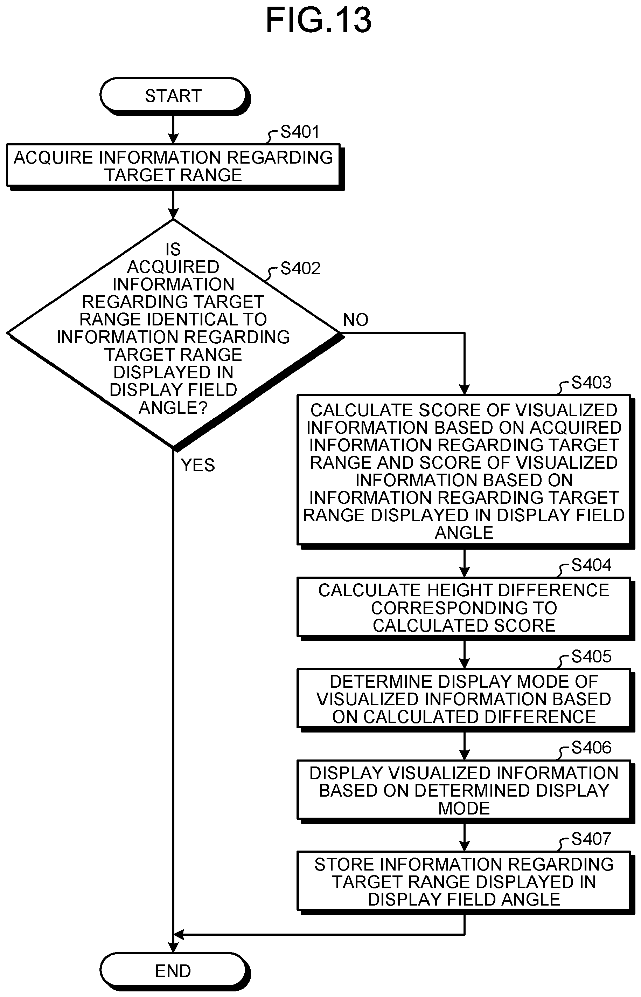

FIG. 13 illustrates a flow of processing in the information processing apparatus 10 according to the embodiment. Specifically, the figure illustrates a flow of processing in which the information processing apparatus 10 displays, in AR representation, the change regarding the target range as the change in the visualized information. First, the information processing apparatus 10 acquires information regarding the target range (S401). For example, the information processing apparatus 10 accesses the storage unit 120 and acquires information regarding the target range stored in the storage unit 120. Next, the information processing apparatus 10 determines whether the acquired information regarding the target range is identical to the information regarding the target range displayed in the display field angle of the terminal device 20. When the acquired information regarding the target range is identical to the information regarding the target range displayed in the display field angle (step S402; YES), the information processing apparatus 10 ends the information processing. When the acquired information regarding the target range is not identical to the information regarding the target range displayed in the display field angle (step S402; NO), the information processing apparatus 10 calculates a score of the visualized information based on the acquired information regarding the target range and a score of the visualized information based on the information regarding the target range displayed in the display field angle (S403). The information processing apparatus 10 then calculates a height difference corresponding to the calculated score (S404). Next, the information processing apparatus 10 determines a display mode of the visualized information based on the calculated difference (S405). For example, the information processing apparatus 10 may determine to display a change at a point having a large difference in animated illustrations based on the calculated magnitude of the difference. Subsequently, the information processing apparatus 10 displays, in AR representation, the visualized information based on the determined display mode (S406). The information processing apparatus 10 then stores information regarding the target range displayed in the display field angle (S407).

FIG. 13 illustrates the flow of the processing in which the information processing apparatus 10 displays, in AR representation, the change related to the target range by using the change in the visualized information. However, the information processing apparatus 10 may perform processing of representing the change related to the target range by using the change in the virtual object. In this case, in step S405, the information processing apparatus 10 may determine the display mode of the virtual object based on the calculated difference. Furthermore, in step S406, the information processing apparatus 10 may display, in AR representation, the virtual object based on the determined display mode.

### <3.4. Variations of processing>

The embodiment of the present disclosure has been described above. Next, variations of processing of the embodiment of the present disclosure will be described. Note that the variations of processing described below may be applied to the embodiments of the present disclosure separately, or may be applied to the embodiments of the present disclosure in combination. Furthermore, the variations of processing may be applied instead of the configuration described in the embodiment of the present disclosure, or may be additionally applied to the configuration described in the embodiment of the present disclosure.

### (1) Normalization, standardization, and cut-off

Although the above embodiment is a case where the presentation control unit 1123 determines the raw value of the height corresponding to the calculated score as the height of the visualized information, the determination method is not limited to this example. The presentation control unit 1123 may determine the height of the visualized information by normalizing the height corresponding to the calculated score. For example, the presentation control unit 1123 may normalize the height corresponding to the calculated score to a value ranging from 0 to 1. The following Formula (2) is an example of a normalization calculation formula.$value = \frac{{E}_{\left(x, y\right)} - min E}{max E - min E}$ (2)

In the formula, E(x, y) represents a value of each point. E represents a numerical string. minE represents a minimum value of the numerical string. maxE represents the maximum value of the numerical string.

The presentation control unit 1123 may determine the height of the visualized information by standardizing the height corresponding to the calculated score. For example, the presentation control unit 1123 may standardize the height corresponding to the calculated score to the value ranging from 0 to 1. The following formula (3) represents an example of a calculation formula for standardization.$value = \frac{{E}_{\left(x, y\right)} - Ave E}{σ}$ (3)

In the formula, E(x, y) represents a value of each point. E represents a numerical string. AveE represents the mean of the numerical string. σ represents a variance of the numerical string.

The presentation control unit 1123 may determine the height of the visualized information by limiting the height corresponding to the calculated score to a predetermined height range. For example, the presentation control unit 1123 may determine the height of the visualized information by cutting off the height corresponding to the calculated score to a predetermined height range.

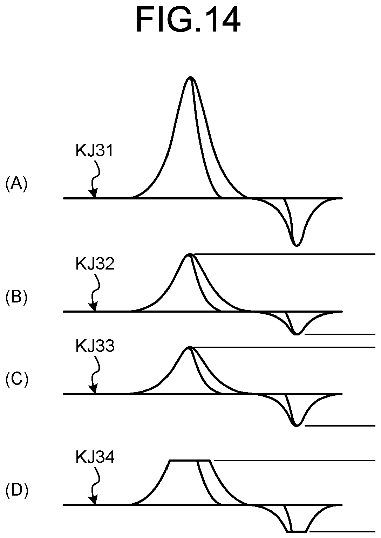

FIG. 14 illustrates an example of variations in height corresponding to the score. FIG. 14(A) illustrates visualized information KJ31 based on the raw value of the height corresponding to the score. FIG. 14(B) illustrates visualized information KJ32 based on the value obtained by normalizing the height corresponding to the score. FIG. 14(C) illustrates visualized information KJ33 based on the value obtained by standardizing the height corresponding to the score. FIG. 14(D) illustrates visualized information KJ24 based on a value obtained by cutting off the height corresponding to the score to a predetermined height range.

### (2) Transmittance of visualized information

The transmittance of the visualized information according to the embodiment may be determined in advance. For example, the transmittance of the visualized information may be a fixed value. Furthermore, the transmittance of the visualized information may be determined, for example, based on the viewpoint of the user. The information processing system 1 may determine the transmittance of the visualized information according to the height of the viewpoint of the user, such that the higher the viewpoint of the user, the higher the transmittance of the visualized information; while the lower the viewpoint of the user, the lower the transmittance of the visualized information. With this configuration, the information processing system 1 can change the transmittance of the visualized information according to the state of the user such as seating or standing, and thus, can perform display presentation that allows the user to comfortably view.

### (3) Notation of score

When the score according to the embodiment indicates the relationship of the target object, the score may be appropriately referred to as a "relationship score". Alternatively, when the target object is related to Synecoculture (registered trademark), the score according to the embodiment may be appropriately referred to as a "Synecoculture score", a "Syneco-score", or a "Synecoculture level". The score according to the embodiment is not limited to these examples and may be notated in any way.

### (4) Layer

The above-described embodiment is a case where the information processing apparatus 10 individually determines the height at which to display the virtual object. Alternatively, the height at which to display the virtual object may be determined by classifying the virtual object into layers according to the attribute (for example, the water content of roots, leaves, and soil) of the virtual object. For example, the information processing apparatus 10 may classify the virtual object into a layer such that the smaller the field angle range of the virtual object to be displayed within the field angle of the display field angle, the higher the layer of a height at which the virtual object is to be displayed. With this configuration, the information processing apparatus 10 can arrange the virtual object that is less likely to undesirably occupy the screen in the upper layer. Furthermore, the information processing apparatus 10 may switch the layer of the height to be displayed according to the attribute of the virtual object.

### (5) Height of viewpoint

The above-described embodiment is a case where the information processing apparatus 10 acquires the information regarding the height of the viewpoint of the user based on the standing state of the user. Alternatively, the information regarding the height of the viewpoint of a walking user may be acquired as the information regarding the height of the viewpoint of the user. Furthermore, the information processing apparatus 10 may acquire information regarding the height from the floor surface using a beacon.

### (6) Slope

The above-described embodiment is a case where the information processing apparatus 10 displays the virtual object perpendicular to the target range based on the information regarding the target range when the floor surface is a flat surface. Here, when the floor surface on which the target range is located is a slope, the information processing apparatus 10 may display the virtual object perpendicular to the target range based on information regarding the target range when the floor surface is a slope. With this configuration, even when the floor surface is a slope, the information processing apparatus 10 can display the virtual object in parallel with the slope.

### (7) Granularity of visualized information

The information processing apparatus 10 may adjust the granularity of the visualized information to be displayed. For example, the information processing apparatus 10 may display the visualized information based on the position information of the user such that the closer the user to the target range, the greater the granularity of the visualized information to be displayed. Furthermore, the information processing apparatus 10 may predetermine the granularity of the visualized information corresponding to the position information regarding the user and switch the granularity of the visualized information to be displayed based on the position information regarding the user.

### (8) Selection based on gaze line of user

When there is a plurality of pieces of visualized information to be displayed within the field angle of the display field angle, the information processing apparatus 10 may determine the visualized information of interest to the user based on the gaze line of the user. The information processing apparatus 10 may then determine the visualized information of interest to the user as the visualized information to be dynamically displayed. For example, the information processing apparatus 10 may determine the visualized information closest to the gaze line of the user as the visualized information to be dynamically displayed. Furthermore, when the viewpoint of the user is lowered like a case where the user is seated, the information processing apparatus 10 may perform specific processing on the visualized information other than the visualized information of interest to the user, for example. For example, the information processing apparatus 10 may perform, as the specific processing, processing of performing transparent display of the visualized information or processing of dissociating the position of the visualized information.

### (9) Other application examples

The above-described embodiment may be applied to visualization of livestock data such as cultivation of shellfish. This makes it possible for the information processing apparatus 10 to apply the technology also to the visualization of livestock data such as under-water data that invisible to the user.

### <<4. Hardware configuration example>>

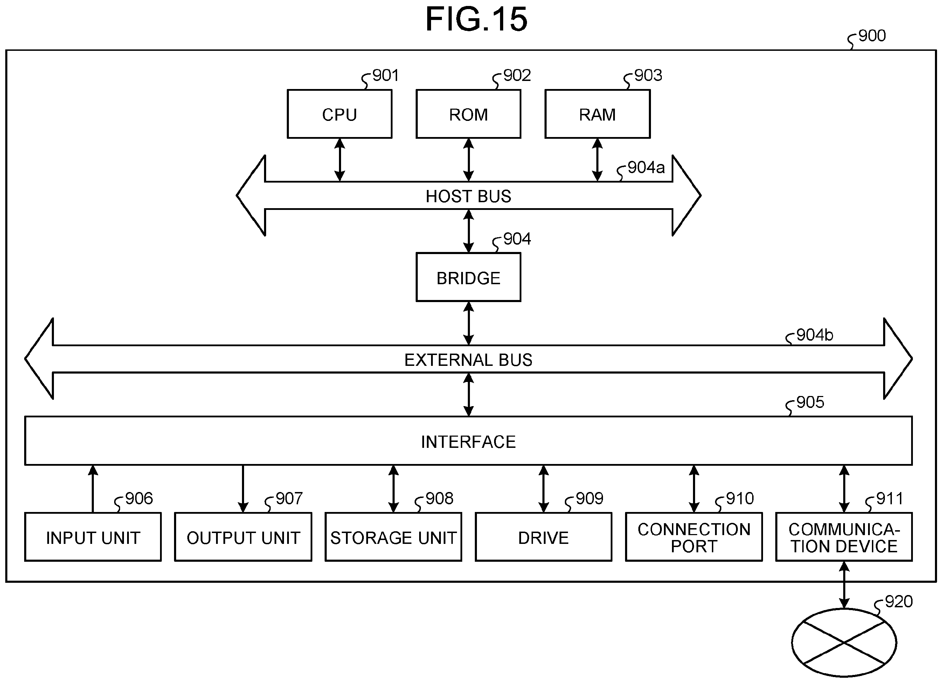

Finally, a hardware configuration example of the information processing apparatus according to the embodiment will be described with reference to FIG. 15. FIG. 15 is a block diagram illustrating a hardware configuration example of an information processing apparatus according to the embodiment. Note that an information processing apparatus 900 illustrated in FIG. 15 can implement the information processing apparatus 10, the terminal device 20, and the information providing device 30 illustrated in FIG. 6, for example. Information processing implemented by the information processing apparatus 10, the terminal device 20, and the information providing device 30 according to the embodiment is implemented in cooperation with software and hardware described below.

As illustrated in FIG. 15, the information processing apparatus 900 includes a central processing unit (CPU) 901, read only memory (ROM) 902, and random access memory (RAM) 903. Furthermore, the information processing apparatus 900 includes a host bus 904a, a bridge 904, an external bus 904b, an interface 905, an input device 906, an output device 907, a storage device 908, a drive 909, a connection port 910, and a communication device 911. Note that the hardware configuration illustrated here is an example, and some of the components may be omitted. In addition, the hardware configuration may further include components other than the components illustrated here.

The CPU 901 functions as, for example, an arithmetic processing device or a control device, and controls the entire or part of operation of each of components based on various programs recorded in the ROM 902, the RAM 903, or the storage device 908. The ROM 902 is a means to store a program loaded by the CPU 901, data used for calculation, and the like. The RAM 903 temporarily or permanently stores, for example, a program loaded by the CPU 901, various parameters that appropriately change when the program is executed, and the like. These are interconnected by a host bus 904a including a CPU bus or the like. The CPU 901, the ROM 902, and the RAM 903 can implement the functions of the control unit 110, the control unit 210, and the control unit 310 described with reference to FIG. 6, for example, in cooperation with software.

The CPU 901, the ROM 902, and the RAM 903 are interconnected via the host bus 904a capable of high-speed data transmission, for example. On the other hand, the host bus 904a is connected to the external bus 904b having a relatively low data transmission speed via the bridge 904, for example. Furthermore, the external bus 904b is connected to various components via the interface 905.

The input device 906 is implemented by a device to which the lister inputs information, such as a mouse, a keyboard, a touch panel, a button, a microphone, a switch, and a lever. Furthermore, the input device 906 may be, for example, a remote control device using infrared rays or other radio waves, or an externally connected device such as a mobile phone or a PDA that supports the operation of the information processing apparatus 900. Furthermore, the input device 906 may include, for example, an input control circuit that generates an input signal based on input information using the above input means and outputs the input signal to the CPU 901. By operating the input device 906, the administrator of the information processing apparatus 900 can input various data to the information processing apparatus 900 and give an instruction on the processing operation.

In addition, the input device 906 can be formed by a device that detects user's position. For example, the input device 906 can include various sensors such as an image sensor (for example, a camera), a depth sensor (for example, a stereo camera), an acceleration sensor, a gyro sensor, a geomagnetic sensor, an optical sensor, a sound sensor, a distance measuring sensor (for example, a time of flight (ToF) sensor), and a force sensor. Furthermore, the input device 906 may acquire information regarding the self-state of the information processing apparatus 900, such as the posture and moving speed of the information processing apparatus 900, and information regarding the surrounding space of the information processing apparatus 900, such as brightness and noise around the information processing apparatus 900. Furthermore, the input device 906 may include a global navigation satellite system (GNSS) module that receives a GNSS signal (for example, a global positioning system (GPS) signal from a GPS satellite) from a GNSS satellite and measures position information including the latitude, longitude, and altitude of the device. Furthermore, regarding the position information, the input device 906 may detect the position by Wi-Fi (registered trademark), transmission and reception using a mobile phone, a PHS, a smartphone, or the like, near field communication, or the like. The input device 906 can implement the function of the sensor unit 230 described with reference to FIG. 6, for example.

The output device 907 is formed by a device capable of visually or audibly notifying the user of acquired information. Examples of such devices include display devices such as CRT display devices, liquid crystal display devices, plasma display devices, EL display devices, laser projectors, LED projectors, and lamps, audio output devices such as speakers and headphones, and printer devices. The output device 907 outputs the results obtained by various processing performed by the information processing apparatus 900, for example. Specifically, the display device visually displays the results obtained by various processing performed by the information processing apparatus 900 in various formats such as texts, images, tables, and graphs. The audio output device converts an audio signal composed of reproduced audio data, acoustic data, or the like into an analog signal and output the signal audibly. The output device 907 can implement, for example, the function of the output unit 220 described with reference to FIG. 6.

The storage device 908 is a data storage device formed as an example of a storage unit of the information processing apparatus 900. The storage device 908 is implemented by, for example, a magnetic storage device such as an HDD, a semiconductor storage device, an optical storage device, an optical magnetic storage device, or the like. The storage device 908 may include a storage medium, a recording device that records data on the storage medium, a reading device that reads data from the storage medium, a deleting device that deletes the data recorded on the storage medium, and the like. This storage device 908 stores programs executed by the CPU 901, various data, as well as various data acquired from the outside, and the like. The storage device 908 can implement the function of the storage unit 120 described with reference to FIG. 6, for example.

The drive 909 is a reader/writer for a storage medium, and is built in or externally connected to the information processing apparatus 900. The drive 909 reads information recorded on a removable storage medium such as a mounted magnetic disk, optical disk, magneto-optical disk, or semiconductor memory, and outputs the read information to the RAM 903. The drive 909 can also write information to the removable storage medium.

The connection port 910 is, for example, a port for connecting an external connection device, such as a universal serial bus (USB) port, an IEEE 1394 port, a small computer system interface (SCSI), an RS-232C port, or an optical audio terminal.

The communication device 911 is, for example, a communication interface formed by a communication device or the like for connecting to a network 920. The communication device 911 is, for example, a communication card for wired or wireless Local Area Network (LAN), Long Term Evolution (LTE), Bluetooth (registered trademark), Wireless USB (WUSB), or the like. Furthermore, the communication device 911 may be an optical communication router, an Asymmetric Digital Subscriber Line (ADSL) router, a modem for various communications, or the like. The communication device 911 can exchange signals or the like through the Internet and with other communication devices in accordance with a predetermined protocol such as TCP/IP. The communication device 911 can implement, for example, the functions of the communication unit 100, the communication unit 200, and the communication unit 300 described with reference to FIG. 6.

The network 920 is a wired or wireless transmission path for information transmitted from a device connected to the network 920. For example, the network 920 may include a public network such as the Internet, a telephone network, and a satellite communication network, or various local area networks (LANs) including Ethernet (registered trademark), wide area networks (WANs), or the like. Furthermore, the network 920 may include a dedicated network such as an Internet protocol-virtual private network (IP-VPN).

An example of the hardware configuration capable of implementing the functions of the information processing apparatus 900 according to the embodiment has been described above. Each of the above-described components may be implemented by using a general-purpose member, or may be implemented by hardware devices specialized for the function of individual components. Accordingly, it is possible to appropriately change the hardware configuration to be used according to the technical level at the time of conducting the embodiment.

### <<5. Summary>>

As described above, the information processing apparatus 10 according to the embodiment performs processing for displaying visualized information for the target object based on the height information corresponding to the score indicating the characteristic of the target object. With this configuration, the information processing apparatus 10 can allow the user to accurately grasp the association between the target object and the visualized information, facilitating further improvement in usability.

Furthermore, the information processing apparatus 10 performs processing for displaying the visualized information in which the complexity of the target object has been converted into height information. With this configuration, the information processing apparatus 10 can display the conceptual information associated with each target object at the height of the visualized information, making it possible to adapt the conceptual information to an experience accompanied by a behavior of the user. This makes it possible for the information processing apparatus 10 to facilitate user's understanding of the target object. Furthermore, the information processing apparatus 10 can visualize the relationship between target objects that are difficult to determine only by numerical values, making it possible to facilitate user's understanding of the target objects.

Furthermore, the information processing apparatus 10 adjusts the height of the visualized information to be displayed to a height not interfering with the display of the target object. For example, the information processing apparatus 10 derives the height of the visualized information from the floor surface based on the height of the viewpoint of the user, the relative horizontal distance between the user and the target range, and the height of the target object included in the target range. With this configuration, the information processing apparatus 10 can display the visualized information without completely hiding the target object. Specifically, the information processing apparatus 10 can display the visualized information and the target object with no overlapping of the visualized information and the target object. Therefore, the information processing apparatus 10 can easily associate the target object with the visualized information indicating the conceptual information.

Furthermore, the information processing apparatus 10 may retroactively display the visualized information based on the information regarding the past target range back. In addition, the information processing apparatus 10 may perform processing for dynamically displaying the transition of the information regarding the target range by comparing the visualized information based on the information regarding the past target range with the visualized information based on the information regarding the current target range. With this configuration, the information processing apparatus 10 can dynamically visualize the change in the target range using animated illustrations and the like. Due to this, the information processing apparatus 10 can make it easy for the user to grasp a change in the target range due to an action of the user such as harvesting or seeding.

This makes it possible provide novel and improved information processing apparatus, information processing method, and information processing program capable of facilitating further improvement in usability.

The preferred embodiments of the present disclosure have been described in detail above with reference to the accompanying drawings. However, the technical scope of the present disclosure is not limited to such examples. It is obvious that a person having ordinary knowledge in the technical field of the present disclosure can come up with various alterations or modifications within the scope of the technical idea described in the claims, and these are understood, of course, to belong to the technical scope of the present disclosure.

For example, each device described in the present specification may be implemented as an independent device, or some or all of the devices may be implemented as separate devices. For example, the information processing apparatus 10, the terminal device 20, and the information providing device 30 illustrated in FIG. 6 may be implemented as independent devices. Furthermore, for example, it may be implemented as a server device connected to the information processing apparatus 10, the terminal device 20, and the information providing device 30 via a network or the like. Alternatively, the function of the control unit 110 included in the information processing apparatus 10 may be included in a server device connected via a network or the like.

Furthermore, the series of processing to be executed by individual devices described in the present specification may be implemented by using any of software, hardware, or a combination of software and hardware. The program constituting the software is stored in advance in, for example, a recording medium (non-transitory medium) provided inside or outside of each of devices. Then, each of programs is read into the RAM at the time of execution by the computer, for example, and is executed by a processor such as a CPU.

Furthermore, the processing described using the flowchart in the present specification do not necessarily have to be executed in the illustrated order. Some processing steps may be performed in parallel. In addition, additional processing steps may be employed, and some processing steps may be omitted.

Furthermore, the effects described in the present specification are merely illustrative or exemplary and are not limited. That is, the technology according to the present disclosure can exhibit other effects that are apparent to those skilled in the art from the description of the present specification in addition to or instead of the above effects.

### Reference Signs List

- 1: INFORMATION PROCESSING SYSTEM
- 10: INFORMATION PROCESSING APPARATUS
- 20: TERMINAL DEVICE
- 30: INFORMATION PROVIDING DEVICE
- 100: COMMUNICATION UNIT
- 110: CONTROL UNIT
- 111: ACQUISITION UNIT
- 112: PROCESSING UNIT
- 1121: POSITION CONTROL UNIT
- 1122: CALCULATION UNIT
- 1123: PRESENTATION CONTROL UNIT
- 1124: PRESENTATION CREATING UNIT
- 113: OUTPUT UNIT
- 120: STORAGE UNIT
- 200: COMMUNICATION UNIT
- 210: CONTROL UNIT
- 220: OUTPUT UNIT
- 230: SENSOR UNIT
- 300: COMMUNICATION UNIT
- 310: CONTROL UNIT
- 320: STORAGE UNIT

## Claims

1. An information processing apparatus (10) including:
a calculation unit (1122) that calculates a score indicating a characteristic of a target object and converts the score into height information corresponding to the calculated score; and
a presentation control unit (1123) that performs processing for displaying visualized information for the target object based on the height information corresponding to the score calculated by the calculation unit (1122); wherein
the calculation unit calculates the score indicating a relationship between a plurality of target objects, and
the presentation control unit performs processing for displaying the visualized information visualizing the relationship between the plurality of target objects with a three-dimensional path based on the score indicating the relationship between the plurality of target objects calculated by the calculation unit.

2. The information processing apparatus according to claim 1,
wherein the presentation control unit performs the processing for displaying the visualized information based on a reference height of the visualized information determined based on the height information and height information based on the height of the target object.

3. The information processing apparatus according to claim 2,
wherein the presentation control unit performs the processing for displaying the visualized information based on height information based on a maximum value, a mean, a mode, or a minimum value of the height of the target object as the height information based on the height of the target object.

4. The information processing apparatus according to claim 2,
wherein the presentation control unit performs the processing for displaying the visualized information based on the height information based on the height of the target object, the height information including an offset determined based on the height of the target object and the height of the visualized information to be displayed.

5. The information processing apparatus according to claim 1,
wherein, when the visualized information to be displayed falls within a field angle of a display field angle determined based on a height of a viewpoint of a user and a relative horizontal distance between the user and the target object, the presentation control unit performs the processing for displaying the visualized information.

6. The information processing apparatus according to claim 5,
wherein, when the visualized information to be displayed falls within the field angle of the display field angle determined based on information regarding an angle of a visual field of the user, the presentation control unit performs the processing for displaying the visualized information.

7. The information processing apparatus according to claim 1,
wherein the calculation unit calculates the score of each of a plurality of target objects, and
the presentation control unit performs processing for displaying the visualized information based on height information corresponding to the score of each of the plurality of target objects.

8. The information processing apparatus according to claim 1,
wherein, when a height difference based on the height information indicating a transition of the visualized information is equal to or more than a predetermined threshold, the presentation control unit performs processing for dynamically displaying the visualized information.

9. The information processing apparatus according to claim 1,
wherein the presentation control unit performs processing for displaying the visualized information in which the score is represented by a mesh three-dimensional graph.

10. The information processing apparatus according to claim 1,
wherein the calculation unit calculates a score indicating a characteristic of the target object related to vegetation.

11. The information processing apparatus according to claim 1,
wherein the presentation control unit performs processing for displaying the visualized information visualizing a personal relationship in a town, product management in a warehouse, personnel allocation in a work place, or an excitement degree in a venue.

12. The information processing apparatus according to claim 1,
wherein the presentation control unit performs processing for displaying the visualized information in augmented reality (AR) representation.

13. An information processing method executed by a computer, the method including:
a calculation step of calculating a score indicating a characteristic of a target object and converting the score into height information corresponding to the calculated score; and
a presentation control step of performing processing for displaying visualized information for the target object based on the height information corresponding to the score calculated by the calculation step;
wherein
the calculation step calculates the score indicating a relationship between a plurality of target objects, and
the presentation control step performs processing for displaying the visualized information visualizing the relationship between the plurality of target objects with a three-dimensional path based on the score indicating the relationship between the plurality of target objects calculated by the calculation step.

14. An information processing program causing a computer to execute:
a calculation procedure (S203) of calculating a score indicating a characteristic of a target object and converting the score into height information corresponding to the calculated score; and
a presentation control procedure (S206) of performing processing for displaying visualized information for the target object based on the height information corresponding to the score calculated by the calculation procedure; wherein
the calculation procedure calculates the score indicating a relationship between a plurality of target objects, and
the presentation control procedure performs processing for displaying the visualized information visualizing the relationship between the plurality of target objects with a three-dimensional path based on the score indicating the relationship between the plurality of target objects calculated by the calculation procedure.

## Patentansprüche

1. Informationsverarbeitungseinrichtung (10), einschließlich:
einer Berechnungseinheit (1122), die einen Score berechnet, der eine Eigenschaft eines Zielobjekts angibt, und den Score in Höheninformationen umwandelt, die dem berechneten Score entsprechen; und
einer Darstellungssteuereinheit (1123), die ein Verarbeiten zum Anzeigen visualisierter Informationen für das Zielobjekt basierend auf den Höheninformationen durchführt, die dem Score entsprechen, der durch die Berechnungseinheit (1122) berechnet wird; wobei
die Berechnungseinheit den Score berechnet, der eine Beziehung zwischen einer Vielzahl von Zielobjekten angibt, und
die Darstellungssteuereinheit das Verarbeiten zum Anzeigen der visualisierten Informationen durchführt, die die Beziehung zwischen der Vielzahl von Zielobjekten mit einem dreidimensionalen Pfad basierend auf dem Score visualisieren, der die Beziehung zwischen der Vielzahl von Zielobjekten angibt, berechnet durch die Berechnungseinheit.

2. Informationsverarbeitungseinrichtung nach Anspruch 1,
wobei die Darstellungssteuereinheit das Verarbeiten zum Anzeigen der visualisierten Informationen basierend auf einer Referenzhöhe der visualisierten Informationen, die basierend auf den Höheninformationen bestimmt werden, und Höheninformationen basierend auf der Höhe des Zielobjekts durchführt.

3. Informationsverarbeitungseinrichtung nach Anspruch 2,
wobei die Darstellungssteuereinheit das Verarbeiten zum Anzeigen der visualisierten Informationen basierend auf Höheninformationen basierend auf einem Maximalwert, einem Mittel, einem Modus oder einem Minimalwert der Höhe des Zielobjekts als die Höheninformationen basierend auf der Höhe des Zielobjekts durchführt.

4. Informationsverarbeitungseinrichtung nach Anspruch 2,
wobei die Darstellungssteuereinheit das Verarbeiten zum Anzeigen der visualisierten Informationen basierend auf den Höheninformationen basierend auf der Höhe des Zielobjekts durchführt, wobei die Höheninformationen einen Versatz einschließen, der basierend auf der Höhe des Zielobjekts und der Höhe der anzuzeigenden visualisierten Informationen bestimmt wird.

5. Informationsverarbeitungseinrichtung nach Anspruch 1,
wobei, wenn die anzuzeigenden visualisierten Informationen in einen Feldwinkel eines Anzeigefeldwinkels fallen, der basierend auf einer Höhe eines Blickpunkts eines Benutzers und einem relativen horizontalen Abstand zwischen dem Benutzer und dem Zielobjekt bestimmt wird, die Darstellungssteuereinheit das Verarbeiten zum Anzeigen der visualisierten Informationen durchführt.

6. Informationsverarbeitungseinrichtung nach Anspruch 5,
wobei, wenn die anzuzeigenden visualisierten Informationen in den Feldwinkel des Anzeigefeldwinkels fallen, der basierend auf Informationen bezüglich eines Winkels eines Sichtfelds des Benutzers bestimmt wird, die Darstellungssteuereinheit das Verarbeiten zum Anzeigen der visualisierten Informationen durchführt.

7. Informationsverarbeitungseinrichtung nach Anspruch 1,
wobei die Berechnungseinheit den Score jedes einer Vielzahl von Zielobjekten berechnet, und
die Darstellungssteuereinheit das Verarbeiten zum Anzeigen der visualisierten Informationen basierend auf Höheninformationen durchführt, die dem Score jedes der Vielzahl von Zielobjekten entsprechen.

8. Informationsverarbeitungseinrichtung nach Anspruch 1,
wobei, wenn eine Höhendifferenz basierend auf den Höheninformationen, die einen Übergang der visualisierten Informationen angeben, gleich oder größer als eine vorbestimmte Schwelle ist, die Darstellungssteuereinheit das Verarbeiten zum dynamischen Anzeigen der visualisierten Informationen durchführt.

9. Informationsverarbeitungseinrichtung nach Anspruch 1,
wobei die Darstellungssteuereinheit das Verarbeiten zum Anzeigen der visualisierten Informationen durchführt, wobei der Score durch ein dreidimensionales Netzdiagramm verkörpert wird.

10. Informationsverarbeitungseinrichtung nach Anspruch 1,
wobei die Berechnungseinheit einen Score berechnet, der eine Eigenschaft des Zielobjekts in Bezug auf Vegetation angibt.

11. Informationsverarbeitungseinrichtung nach Anspruch 1,
wobei die Darstellungssteuereinheit das Verarbeiten zum Anzeigen der visualisierten Informationen durchführt, die eine persönliche Beziehung in einer Stadt, eine Produktverwaltung in einem Lager, eine Personalzuweisung an einem Arbeitsplatz oder einen Begeisterungsgrad an einem Veranstaltungsort visualisieren.

12. Informationsverarbeitungseinrichtung nach Anspruch 1,
wobei die Darstellungssteuereinheit das Verarbeiten zum Anzeigen der visualisierten Informationen in einer Augmented-Reality-Verkörperung (AR-Verkörperung) durchführt.

13. Informationsverarbeitungsverfahren, das durch einen Computer ausgeführt wird, wobei das Verfahren einschließt:
einen Berechnungsschritt des Berechnens eines Scores, der eine Eigenschaft eines Zielobjekts angibt, und des Umwandelns des Scores in Höheninformationen, die dem berechneten Score entsprechen; und
einen Darstellungssteuerschritt des Durchführens des Verarbeitens zum Anzeigen visualisierter Informationen für das Zielobjekt basierend auf den Höheninformationen, die dem Score entsprechen, der durch den Berechnungsschritt berechnet wird;
wobei
der Berechnungsschritt den Score berechnet, der eine Beziehung zwischen einer Vielzahl von Zielobjekten angibt, und
der Darstellungssteuerschritt das Verarbeiten zum Anzeigen der visualisierten Informationen durchführt, die die Beziehung zwischen der Vielzahl von Zielobjekten mit einem dreidimensionalen Pfad basierend auf dem Score visualisieren, der die Beziehung zwischen der Vielzahl von Zielobjekten angibt, berechnet durch den Berechnungsschritt.

14. Informationsverarbeitungsprogramm, das einen Computer veranlasst, auszuführen:
einen Berechnungsvorgang (S203) zum Berechnen eines Scores, der eine Eigenschaft eines Zielobjekts angibt, und den Score in Höheninformationen umwandelt, die dem berechneten Score entsprechen; und
einen Darstellungssteuervorgang (S206) zum Durchführen des Verarbeitens zum Anzeigen visualisierter Informationen für das Zielobjekt basierend auf den Höheninformationen, die dem Score entsprechen, der durch den Berechnungsvorgang berechnet wird; wobei
der Berechnungsvorgang den Score berechnet, der eine Beziehung zwischen einer Vielzahl von Zielobjekten angibt, und
der Darstellungssteuervorgang das Verarbeiten zum Anzeigen der visualisierten Informationen durchführt, die die Beziehung zwischen der Vielzahl von Zielobjekten mit einem dreidimensionalen basierend auf dem Score visualisieren, der die Beziehung zwischen der Vielzahl von Zielobjekten angibt, berechnet durch den Berechnungsvorgang.

## Revendications

1. Appareil de traitement d'informations (10) comportant :
une unité de calcul (1122) qui calcule un score indiquant une caractéristique d'un objet cible et convertit le score en informations de hauteur correspondant au score calculé ; et
une unité de commande de présentation (1123) qui met en œuvre un traitement permettant d'afficher des informations visualisées pour l'objet cible en fonction des informations de hauteur correspondant au score calculé par l'unité de calcul (1122) ; dans lequel
l'unité de calcul calcule le score indiquant une relation entre une pluralité d'objets cibles, et
l'unité de commande de présentation met en œuvre un traitement permettant d'afficher les informations visualisées visualisant la relation entre la pluralité d'objets cibles avec une trajectoire tridimensionnelle en fonction du score indiquant la relation entre la pluralité d'objets cibles calculé par l'unité de calcul.

2. Appareil de traitement d'informations selon la revendication 1,
dans lequel l'unité de commande de présentation met en œuvre le traitement permettant d'afficher les informations visualisées en fonction d'une hauteur de référence des informations visualisées déterminée en fonction des informations de hauteur et d'informations de hauteur en fonction de la hauteur de l'objet cible.

3. Appareil de traitement d'informations selon la revendication 2,
dans lequel l'unité de commande de présentation met en œuvre le traitement permettant d'afficher les informations visualisées en fonction d'informations de hauteur en fonction d'une valeur maximale, d'une moyenne, d'un mode, ou d'une valeur minimale de la hauteur de l'objet cible en guise d'informations de hauteur en fonction de la hauteur de l'objet cible.

4. Appareil de traitement d'informations selon la revendication 2,
dans lequel l'unité de commande de présentation met en œuvre le traitement permettant d'afficher les informations visualisées en fonction des informations de hauteur en fonction de la hauteur de l'objet cible, les informations de hauteur comportant un décalage déterminé en fonction de la hauteur de l'objet cible et de la hauteur des informations visualisées à afficher.

5. Appareil de traitement d'informations selon la revendication 1,
dans lequel, lorsque les informations visualisées à afficher se situent dans un angle de champ d'un angle de champ d'affichage déterminé en fonction d'une hauteur d'un point de vue d'un utilisateur et d'une distance horizontale relative entre l'utilisateur et l'objet cible, l'unité de commande de présentation met en œuvre le traitement permettant d'afficher les informations visualisées.

6. Appareil de traitement d'informations selon la revendication 5,
dans lequel, lorsque les informations visualisées à afficher se situent dans l'angle de champ de l'angle de champ d'affichage déterminé en fonction d'informations concernant un angle d'un champ visuel de l'utilisateur, l'unité de commande de présentation met en œuvre le traitement permettant d'afficher les informations visualisées.

7. Appareil de traitement d'informations selon la revendication 1,
dans lequel l'unité de calcul calcule le score de chacun parmi une pluralité d'objets cibles, et
l'unité de commande de présentation met en œuvre un traitement permettant d'afficher les informations visualisées en fonction des informations de hauteur correspondant au score de chacun parmi la pluralité d'objets cibles.

8. Appareil de traitement d'informations selon la revendication 1,
dans lequel, lorsqu'une différence de hauteur en fonction des informations de hauteur indiquant une transition des informations visualisées est égale ou supérieure à un seuil prédéterminé, l'unité de commande de présentation met en œuvre un traitement permettant d'afficher dynamiquement les informations visualisées.

9. Appareil de traitement d'informations selon la revendication 1,
dans lequel l'unité de commande de présentation met en œuvre un traitement permettant d'afficher les informations visualisées dans lesquelles le score est représenté par un graphique tridimensionnel maillé.

10. Appareil de traitement d'informations selon la revendication 1,
dans lequel l'unité de calcul calcule un score indiquant une caractéristique de l'objet cible apparentée à de la végétation.

11. Appareil de traitement d'informations selon la revendication 1,
dans lequel l'unité de commande de présentation met en œuvre un traitement permettant d'afficher les informations visualisées visualisant une relation interpersonnelle dans une ville, une gestion de produits dans un entrepôt, une allocation de personnel dans un lieu de travail, ou un degré d'enthousiasme dans une salle.

12. Appareil de traitement d'informations selon la revendication 1,
dans lequel l'unité de commande de présentation met en œuvre un traitement permettant d'afficher les informations visualisées dans une représentation en réalité augmentée (AR).

13. Procédé de traitement d'informations exécuté par un ordinateur, le procédé comportant :
une étape de calcul consistant à calculer un score indiquant une caractéristique d'un objet cible et à convertir le score en informations de hauteur correspondant au score calculé ; et
une étape de commande de présentation consistant à mettre en œuvre un traitement permettant d'afficher des informations visualisées pour l'objet cible en fonction des informations de hauteur correspondant au score calculé par l'étape de calcul ;
dans lequel
l'étape de calcul calcule le score indiquant une relation entre une pluralité d'objets cibles, et
l'étape de commande de présentation met en œuvre un traitement permettant d'afficher les informations visualisées visualisant la relation entre la pluralité d'objets cibles avec une trajectoire tridimensionnelle en fonction du score indiquant la relation entre la pluralité d'objets cibles calculé par l'étape de calcul.

14. Programme de traitement d'informations amenant un ordinateur à exécuter :
une procédure de calcul (S203) consistant à calculer un score indiquant une caractéristique d'un objet cible et à convertir le score en informations de hauteur correspondant au score calculé ; et
une procédure de commande de présentation (S206) consistant à mettre en œuvre un traitement permettant d'afficher des informations visualisées pour l'objet cible en fonction des informations de hauteur correspondant au score calculé par la procédure de calcul ; dans lequel
la procédure de calcul calcule le score indiquant une relation entre une pluralité d'objets cibles, et
la procédure de commande de présentation met en œuvre un traitement permettant d'afficher les informations visualisées visualisant la relation entre la pluralité d'objets cibles avec une trajectoire tridimensionnelle en fonction du score indiquant la relation entre la pluralité d'objets cibles calculé par la procédure de calcul.
